# EUROPEAN PATENT SPECIFICATION

(11) **EP 3 984 870 B1**
(45) Date of publication and mention of the grant of the patent: **16.08.2023**
(21) Application number: 21197688.1
(22) Date of filing: 20.09.2021
(51) Int. Cl.: B62J 9/12, B62J 17/06

(54) **STRADDLED VEHICLE**
GRÄTSCHSITZFAHRZEUG
VÉHICULE À ENFOURCHER

(30) Priority: 16.10.2020 JP 2020174980
(43) Date of publication of application: 20.04.2022
(73) Proprietor: Yamaha Hatsudoki Kabushiki Kaisha, Iwata-shi, Shizuoka-ken 438-8501 (JP)
(72) Inventor: Yanagihara, Yuki, Iwata-shi, Shizuoka-ken, 438-8501 (JP); Fendikanata, Yanuar, 13920 Daerah Khusus Ibukota Jakarta (ID); Maetani, Naoki, Iwata-shi, Shizuoka-ken, 438-8501 (JP)
(74) Representative: Grünecker Patent- und Rechtsanwälte PartG mbB

(56) References cited:
- EP-A1- 3 517 418
- JP-A- 2016 132 405
- US-A1- 2011 227 311

## Description

The present invention relates to a straddled vehicle according to the preamble of independent claim 1. Such a straddled vehicle can be taken from the prior art document US 2011/227311 A1.

JP 2016022748 A discloses a scooter which is an example of a straddled vehicle. This scooter includes a front leg shield disposed in front of a seat, and a rack fixed to the front leg shield. A storage space, in which an article such as a hand-carried baggage is taken, is formed between the front leg shield and the rack.

The rack is fixed to the front leg shield by six fastening members. Six concave portions (elements 92 in Fig. 8 of JP 2016022748 A) recessed forward from a rear surface of the rack are overlapped with six bosses provided in the front leg shield. As shown in Fig. 12 of JP 2016022748 A, the six concave portions of the rack form six projections that project forward from an inner surface of the rack. The six fastening members are inserted in the six concave portions from the rear of the rack. The fastening member penetrates a bottom of the concave portion in a front-rear direction and is attached to the boss of the front leg shield located in front of the concave portion. Thus, the rack is fixed to the front leg shield.

As described above, the concave portion of the rack disclosed in JP 2016022748 A forms the projection that projects forward from the inner surface of the rack (refer to Fig. 12 of JP 2016022748 A). The projection of the rack is disposed in the storage space in which an article is taken, and thus the projection could come into contact with an article in the storage space. For example, when the scooter turns to the right or the left and an article moves leftward or rightward within the storage space, the article would hit against the projections of the rack. When an article is already in contact with the projections, a centrifugal force due to the right-turn or the left-turn of the scooter is transmitted to the projections from the article. Thus, it is necessary for the projection to have the rigidity where the projection does not break even if such a phenomenon occurs.

In the rack disclosed in JP 2016022748 A, two projections are provided in each of a right side wall and a left side wall of the rack, and two projections are provided in a bottom wall of the rack. Since a plurality of the projections are disposed in a balanced manner as described above, an article in the storage space would come into contact with a plurality of the projections. Accordingly, a load of an article is distributed, and stress generated in individual projections lowers. As a result, it is possible to prevent the break of the projections without excessively increasing the rigidity of individual projections. However, when there are many projections, the volume of the storage space decreases and the size and the number of articles which can be taken in the storage space are limited.

It is considered to reinforce the projections by adding ribs around the projection or to increase the rigidity of the projections by increasing the thickness of the projection, instead of increasing the number of the projections. However, these methods require adding ribs or enlarging the projection, so that the volume of the storage space also decreases and the size and the number of articles which can be taken in the storage space are also limited. Thus, it is difficult for a structure in which an article in the storage space could come into contact with the projection of the rack to decrease the load applied to the projection from an article in the storage space without sacrificing the volume of the storage space.

Thus, an object of the present invention is to provide a straddled vehicle that is able to prevent an article in a storage space from coming into contact with a fastening boss of a pocket cover while reducing a decrease in the volume of the storage space. According to the present invention the present object is achieved by a straddled vehicle according to claim 1. Preferred embodiments are laid down in the dependent claims.

According to the invention, the straddled vehicle includes a seat on which a driver sits, a leg shield that is disposed farther to the front than a front end of the seat and faces legs of the driver sitting on the seat in a front-rear direction, a pocket cover that is disposed behind the leg shield and forms together with the leg shield a storage space in which an article is put, and a fastening member that fixes the pocket cover to the leg shield, in which the pocket cover includes a contacting end surface that is in contact with the leg shield, and a fastening boss that is disposed farther inward than the contacting end surface in a width direction of the pocket cover and in which the fastening member is inserted, the leg shield includes an overlap portion that overlaps the pocket cover in a rear view, a projecting wall that projects rearward from the overlap portion, and a through hole that is disposed in front of the fastening boss and in which the fastening member is inserted, the projecting wall forms the storage space at a space inside the pocket cover together with the pocket cover and is disposed on at least one of a right side and a left side of the storage space, the projecting wall is disposed between the fastening boss and the storage space in a vehicle width direction, and at least a portion of the projecting wall is disposed farther to the rear than the contacting end surface of the pocket cover.

With this arrangement, the leg shield and the pocket cover form the storage space. The pocket cover overlaps the overlap portion of the leg shield in a rear view. The projecting wall of the leg shield, which projects rearward from the overlap portion, forms a portion of the storage space. The projecting wall is disposed on at least one of the right side and the left side of the storage space. Thus, the projecting wall is disposed on at least one of the right side and the left side of the storage space.

The pocket cover is fixed to the leg shield by the fastening member inserted in the fastening boss of the pocket cover and the through hole of the leg shield. The projecting wall is disposed between the fastening boss and the storage space in the vehicle width direction. Thus, an article in the storage space would come into contact with not the fastening boss but the projecting wall. Accordingly, a load of an article in the storage space is not transmitted directly to the fastening boss. Furthermore, the load of an article in the storage space is distributed to the pocket cover and the projecting wall, so that a load transmitted to the fastening boss via the inner surface of the pocket cover decreases.

In this way, since an article in the storage space does not come into contact with the fastening boss, it is possible to downsize the fastening boss or to decrease the number of the fastening bosses. Thus, it is possible to decrease a volume of a range which the fastening boss occupies in a space between the leg shield and the pocket cover. As a result, it is possible to prevent an article in the storage space from coming into contact with the fastening boss of the pocket cover while reducing a decrease in the volume of the storage space. Furthermore, since an article in the storage space does not come into contact with the fastening boss, it is possible to prevent the article from getting stuck with the fastening boss and thus to improve user convenience.

Additionally, the pocket cover is fixed to the leg shield with the contacting end surface of the pocket cover being in contact with the leg shield. At least a portion of the projecting wall is disposed farther to the rear than the contacting end surface of the pocket cover. If water passes through a gap between the contacting end surface of the pocket cover and the leg shield, this water does not reach the storage space unless it passes through a gap between the projecting wall and the pocket cover in the front-rear direction. Thus, water such as splashes of water generated while the straddled vehicle is traveling or cleaning the straddled vehicle is unlikely to enter the storage space. As a result, it is possible to reduce water to enter the storage space.

In the present preferred embodiment, at least one of the following features may be added to the straddled vehicle.

The projecting wall of the leg shield includes an upper end disposed above the through hole of the leg shield, and a lower end disposed below the through hole.

With this arrangement, the upper end of the projecting wall is disposed above the through hole, and the lower end of the projecting wall is disposed below the through hole. Since the projecting wall has such a length in the up-down direction, it is possible to protect the fastening boss from an article in the storage space within a wide range in the up-down direction. Furthermore, since the projecting wall is long in the up-down direction, it is possible to block water within a wide range in the up-down direction and to further reduce water to enter the storage space.

In a case in which the leg shield includes a plurality of the through holes, the upper end of the projecting wall may be disposed above at least one of the through holes. Similarly, in a case in which the leg shield includes a plurality of the through holes, the lower end of the projecting wall may be disposed below at least one of the through holes.

The leg shield further includes a fitting groove in which an edge of the pocket cover including the contacting end surface is fitted, and the projecting wall of the leg shield is disposed inward of the fitting groove in the width direction of the pocket cover.

With this arrangement, the edge of the pocket cover including the contacting end surface is fitted in the fitting groove provided in the leg shield. The edge of the pocket cover and the fitting groove of the leg shield forms a labyrinth gap a direction of which changes 180 degree. Thus, water is unlikely to pass through a gap between the contacting end surface of the pocket cover and the leg shield. Furthermore, the projecting wall of the leg shield is disposed inward of the fitting groove in the width direction of the pocket cover. If water passes through the labyrinth gap and enters the pocket cover, this water is prevented from entering the storage space by the projecting wall. Thus, it is possible to further reduce water to enter the storage space.

The leg shield includes a concave portion recessed forward to a position farther to the front than the contacting end surface of the pocket cover, and at least a portion of the concave portion is disposed in front of the pocket cover and forms the storage space together with the pocket cover.

With this arrangement, at least a portion of the concave portion of the leg shield is disposed in front of the pocket cover and overlaps the pocket cover in a rear view. The concave portion forms the storage space together with the pocket cover. Thus, it is possible to increase the volume of the storage space. Furthermore, since the concave portion is greatly recessed forward, that is, the concave portion is recessed forward to a position farther to the front than the contacting end surface of the pocket cover, it is possible to greatly increase the volume of the storage space.

In a horizontal cross-section of the leg shield, at least a portion of an inner surface of the projecting wall forming the storage space is disposed on a straight line that is an extended line of an inner surface of the concave portion forming the storage space and that extends rearward from the inner surface of the concave portion.

With this arrangement, the inner surface of the projecting wall and the inner surface of the concave portion form the storage space. In a horizontal cross-section of the leg shield, at least a portion of the inner surface of the projecting wall is disposed on a straight line that is an extended line of the inner surface of the concave portion and that extends rearward from the inner surface of the concave portion. A connecting portion between the inner surface of the projecting wall and the inner surface of the concave portion is flat and does not form a step. Thus, it is possible to lower stress generated in the connecting portion between the inner surface of the projecting wall and the inner surface of the concave portion.

The projecting wall of the leg shield includes a right projecting wall and a left projecting wall disposed on a right side and a left side of the storage space, respectively, one of the right projecting wall and the left projecting wall is disposed between the fastening boss and the storage space in the vehicle width direction, and at least a portion of the right projecting wall and at least a portion of the left projecting wall are disposed farther to the rear than the contacting end surface of the pocket cover.

With this arrangement, the right projecting wall is disposed on the right side of the storage space and the left projecting wall is disposed on the left side of the storage space. One of the right projecting wall and the left projecting wall is disposed between the fastening boss and the storage space in the vehicle width direction. Thus, it is possible to protect the fastening boss from an article in the storage space. Furthermore, since both of the right projecting wall and the left projecting wall are disposed farther to the rear than the contacting end surface of the pocket cover, it is possible to further reduce water to enter the storage space.

At least one of the leg shield and the pocket cover includes a drainage hole that drains water in the storage space, and the drainage hole is disposed farther inward than the right projecting wall and the left projecting wall in the width direction of the pocket cover.

With this arrangement, the drainage hole to drain water in the storage space is provided in at least one of the leg shield and the pocket cover. The drainage hole is disposed farther inward than the right projecting wall and the left projecting wall in the width direction of the pocket cover. Water, which has passed through a gap between the right projecting wall or the left projecting wall and the pocket cover and entered the storage space, flows downward within the storage space toward the drainage hole and enters the drainage hole. Thus, it is possible to immediately discharge the water from the storage space even if water has passed through a gap between the right projecting wall or the left projecting wall and the pocket cover.

The projecting wall of the leg shield includes a high portion that projects rearward from the overlap portion, and a low portion that projects rearward from the overlap portion and a projecting amount of which is smaller than that of the high portion, and the high portion is disposed between the fastening boss and the storage space in the vehicle width direction.

With this arrangement, the high portion and the low portion are provided in the projecting wall. The high portion and the low portion are different from each other in a projecting amount in a rear direction from the overlap portion. The high portion, a projecting amount of which is greater than that of the low portion, is disposed between the fastening boss and the storage space in the vehicle width direction. Thus, it is possible to protect the fastening boss from an article in the storage space.

The low portion of the projecting wall is disposed farther outward than the high portion of the projecting wall in the width direction of the pocket cover.

With this arrangement, the low portion of the projecting wall is disposed farther outward than the high portion of the projecting wall in the width direction of the pocket cover. In other words, since a projecting amount of the low portion is smaller than a projecting amount of the high portion, it is possible to move the low portion to a position farther outward than the high portion in the width direction of the pocket cover. Thus, it is possible to increase the width of the storage space and to further reduce a decrease in the volume of the storage space.

The projecting wall of the leg shield includes an upper portion that is disposed over the fastening boss and overlaps the fastening boss in a plan view and an inner portion disposed between the fastening boss and the storage space in the vehicle width direction.

With this arrangement, the upper portion and the inner portion are provided in the projecting wall. The upper portion is disposed over the fastening boss and overlaps the fastening boss in a plan view. The inner portion is disposed between the fastening boss and the storage space in the vehicle width direction. Both of the upper portion and the inner portion form the storage space. Thus, it is possible to protect the fastening boss from an article in the storage space not only at the inner side of the fastening boss, but also at the upper side of the fastening boss.

According to the invention, the pocket cover includes an inner rib that projects forward from an inner surface of the pocket cover, and the inner rib is disposed farther outward than the projecting wall in the width direction of the pocket cover and overlaps the projecting wall in a side view.

With this arrangement, the inner rib, which projects from the inner surface of the pocket cover, is disposed farther outward than the projecting wall of the leg shield in the width direction of the pocket cover and overlaps the projecting wall of the leg shield in a side view. In this way, since the inner rib and the projecting wall are disposed in the vehicle width direction and a gap between the projecting wall and the pocket cover decreases, it is possible to further reduce water to enter the storage space.

The straddled vehicle further includes an electric power supply socket that includes a terminal insertion hole disposed in the storage space and supplies electric power to an electric device through a terminal inserted in the terminal insertion hole.

With this arrangement, the terminal insertion hole of the electric power supply socket is disposed in the storage space formed between the leg shield and the pocket cover. Electric power is supplied to an electric device through a terminal inserted in the terminal insertion hole. As described above, water, which has passed through a gap between the contacting end surface of the pocket cover and the leg shield, is not able to enter the storage space unless the water passes through a gap between the projecting wall and the pocket cover in the front-rear direction. Thus, it is possible to prevent or minimize the electric power supply socket and an electric device from getting wet.

The electric device represents a portable electric device that moves together with the straddled vehicle while the straddled vehicle is traveling. The terminal may be a terminal of the electric device itself such as a socket charger or an on-board charger, may be a terminal of an adapter provided with a hole that fits a terminal of the electric device or a power supply cable, or may be a terminal of a power supply cable to connect the electric device and the electric power supply socket.

The pocket cover is disposed only on a right side or a left side of a center of the straddled vehicle in the vehicle width direction, and the projecting wall of the leg shield is disposed at least outward of the storage space in the vehicle width direction.

With this arrangement, not a wide pocket cover a width of which is equal or substantially equal to that of the leg shield, but a narrow pocket cover a width of which is about half the width of the leg shield is fixed to the leg shield. The pocket cover is disposed only on the right side or the left side of the center of the straddled vehicle in the vehicle width direction. Splashes of water generated while the straddled vehicle is traveling or cleaning the straddled vehicle are likely to enter the pocket cover from an outer side of the pocket cover in the vehicle width direction. Thus, it is possible to effectively reduce water to enter the storage space by locating the projecting wall at an outer side of the pocket cover in the vehicle width direction.

The fastening member is attachable and detachable with respect to the leg shield and the pocket cover, and the pocket cover is attachable and detachable with respect to the leg shield.

With this arrangement, it is possible to remove the fastening member, which fixes the pocket cover to the leg shield, from the leg shield and the pocket cover without breaking the fastening member. It is possible to remove the pocket cover from the leg shield by removing the fastening member. It is possible to fix the pocket cover to the leg shield by attaching the fastening member. Thus, it is possible to easily replace the existing pocket cover with a new pocket cover. Furthermore, it is possible to select any one of a plurality of pocket covers different in shape and to fix the selected pocket cover to the leg shield.

The above and other elements, features, steps, characteristics, and advantages of the present invention will become more apparent from the following detailed description of the preferred embodiments with reference to the attached drawings.

### BRIEF DESCRIPTION OF THE DRAWINGS

Fig. 1A is a left side view of a straddled vehicle according to a preferred embodiment.
Fig. 1B is a left side view of the straddled vehicle according to the preferred embodiment.
Fig. 2 is a plan view of the straddled vehicle.
Fig. 3 is a rear view of a leg shield and a pocket cover.
Fig. 4 is a rear view of the leg shield with the pocket cover detached.
Fig. 5 is a cross-sectional view showing a vertical cross-section of the leg shield, the pocket cover and an electric power supply socket taken along line V-V shown in Fig. 3.
Fig. 6 is a cross-sectional view showing a horizontal cross-section of the leg shield and the pocket cover taken along line VI-VI shown in Fig. 7.
Fig. 7 is an enlarged view of a portion of Fig. 3.
Fig. 8 is an enlarged view of a portion of Fig. 4.
Fig. 9 is a front view of the pocket cover.
Fig. 10 is a right side view of the pocket cover.
Fig. 11 is a rear view of the leg shield with the pocket cover detached.
Fig. 12 is a perspective view of the leg shield with the pocket cover detached.
Fig. 13 is a left side view of the leg shield with the pocket cover detached.
Fig. 14 is a cross-sectional view showing horizontal cross-sections of the leg shield and the pocket cover taken along line XIV-XIV shown in Fig. 7.
Fig. 15 is a cross-sectional view showing horizontal cross-sections of the leg shield and the pocket cover taken along line XV-XV shown in Fig. 7.
Fig. 16 is a cross-sectional view showing vertical cross-sections of the leg shield and the pocket cover taken along line XVI-XVI shown in Fig. 15.
Fig. 17 is a schematic view for describing variations of the pocket cover to be fixed to the leg shield.

### DETAILED DESCRIPTION OF PREFERRED EMBODIMENTS

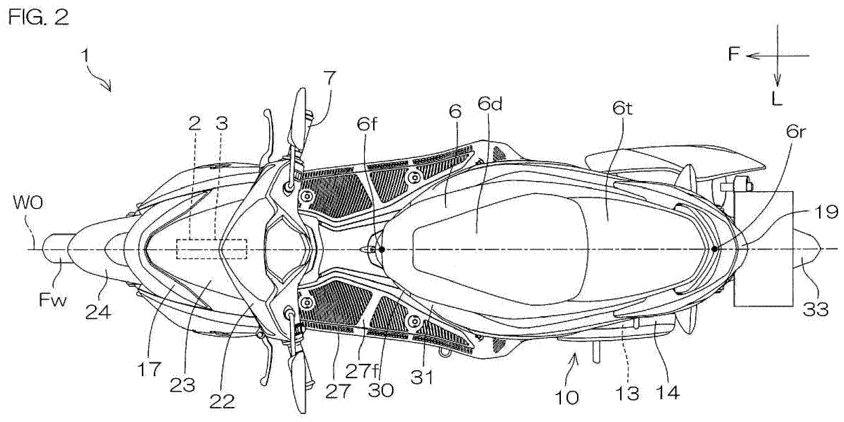

A straddled vehicle 1 in a reference posture placed on a horizontal road surface will be hereinafter described unless specific notice is given. The reference posture is a posture in which a person does not ride the straddled vehicle 1 and a steering handle 7 is disposed at a straight-traveling position (a position of the steering handle 7 shown in Fig. 2) at which the straddled vehicle 1 travels straight and a rotational center of a rear wheel Rw is horizontal.

Front-rear, up-down, and right-left directions in the following description are defined based on the straddled vehicle 1 in the reference posture unless specific notice is given. The right-left direction corresponds to a vehicle width direction. A vehicle center WO corresponds to a vertical plane that passes through a center line of a head pipe 3 and that is perpendicular to the rotational center of the rear wheel Rw. A plan view, a side view and a rear view in the following description represent a plan view, a side view and a rear view of the straddled vehicle 1, respectively unless specific notice is given. The term "upper end" in the following description represents an uppermost portion of a member. That is, the term "upper end" represents an uppermost end. The same applies to the lower end, front end, rear end, right end, left end, outer end, and inner end.

The term "a width direction of a pocket cover 26" in the following description is a direction parallel to the vehicle width direction. The phrase "a member is disposed farther inward than a reference member in the width direction of the pocket cover 26" represents that the member is closer to a center C1 of the pocket cover 26 in the vehicle width direction than the reference member. The phrase "a member is disposed farther outward than a reference member in the width direction of the pocket cover 26" represents that the member is farther to the center C1 of the pocket cover 26 in the vehicle width direction than the reference member. If a midpoint is defined by a position where distances in the vehicle width direction from a right end and a left end of a horizontal cross section of the pocket cover 26 are equal, the center C1 of the pocket cover 26 in the vehicle width direction represents a flat surface or a curved surface which is composed of a plurality of straight lines perpendicular to the up-down direction and the vehicle width direction and which passes through any midpoint.

First, the fundamental configuration of the straddled vehicle 1 will be described.

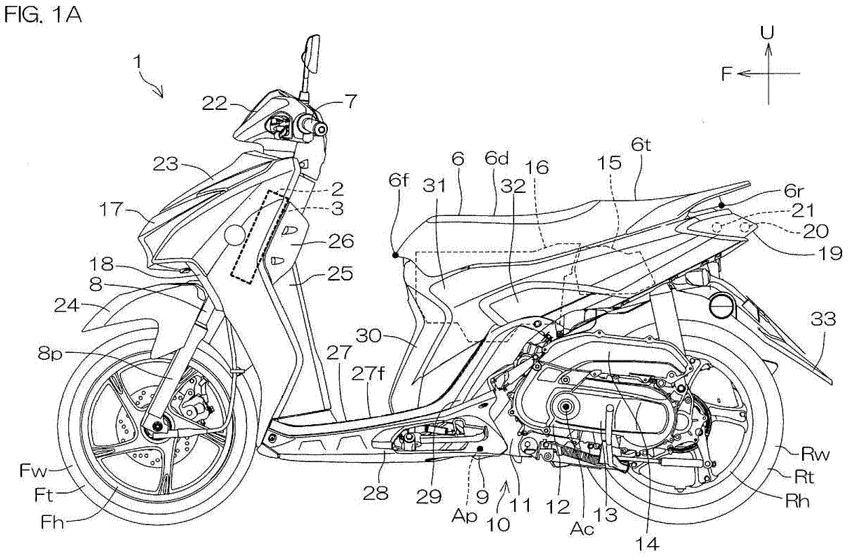

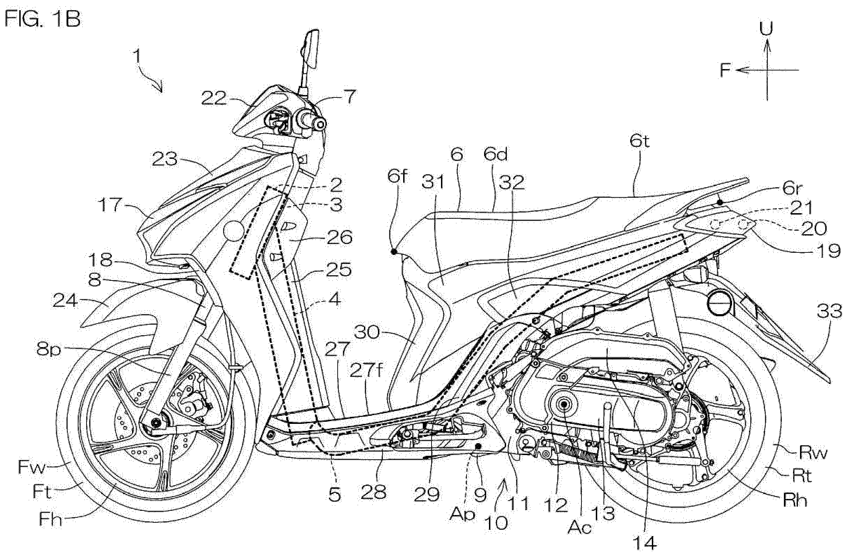

Fig. 1A and Fig. 1B are left side views of the straddled vehicle 1 according to a preferred embodiment. Fig. 2 is a plan view of the straddled vehicle 1. An arrow U and an arrow F in Fig. 1A and Fig. 1B represent an upper direction and a front direction of the straddled vehicle 1, respectively. An arrow L in Fig 2 represents a left direction of the straddled vehicle 1. The same applies to other figures.

As shown in Fig. 1A, the straddled vehicle 1 is a scooter, for example. The straddled vehicle 1 includes a frame 2 covered with an exterior cover and a front wheel Fw and a rear wheel Rw attached to the frame 2. The front wheel Fw is attached to the frame 2 via a front fork 8 described below. The rear wheel Rw is attached to the frame 2 via a swing unit 10 described below. The front wheel Fw includes a rubber tire Ft that rolls on the road surface and a metal wheel Fh surrounded by the tire Ft. Similarly, the rear wheel Rw includes a rubber tire Rt that rolls on the road surface and a metal wheel Rh surrounded by the tire Rt.

The frame 2 includes the head pipe 3 extending obliquely rearward and upward. As shown in Fig. 1B, the frame 2 further includes a down frame 4 extending obliquely rearward and downward from the head pipe 3, and a pair of lower frames 5 extending obliquely rearward and upward from the down frame 4. The pair of lower frames 5 overlap each other in a side view. Front ends of the pair of lower frames 5 are disposed below the head pipe 3.

As shown in Fig. 1A, the straddled vehicle 1 includes a saddle type seat 6 on which a rider sits. A front end 6f of the seat 6 is disposed farther to the rear than the head pipe 3. The seat 6 may be for one person or may be for two persons. Fig. 1A shows an example of the later. In this example, the seat 6 includes a driver seat 6d on which a driver sits and a tandem seat 6t on which a passenger sits. The tandem seat 6t may be integral with the driver seat 6d or may be a seat separate from the driver seat 6d. The tandem seat 6t extends rearward from the driver seat 6d. The tandem seat 6t is disposed behind the driver seat 6d in a plan view.

The straddled vehicle 1 includes the steering handle 7 to be operated by a driver, and the front fork 8 supporting rotatably the front wheel Fw. The front fork 8, which is an example of a front wheel supporting member, includes a pair of fork pipes 8p disposed on the right side and the left side of the front wheel Fw, respectively, and a steering shaft inserted in the head pipe 3. The steering shaft protrudes upward from an upper end portion of the head pipe 3. The steering handle 7 is connected to an upper end portion of the steering shaft. The steering handle 7 is disposed over the head pipe 3. When the steering handle 7 is operated, the front wheel Fw turns rightward and leftward around the center line of the head pipe 3 together with the steering handle 7 and the front fork 8. Thus, the straddled vehicle 1 is steered.

The straddled vehicle 1 includes the swing unit 10 that is swingable upward and downward with respect to the frame 2. The swing unit 10 is an example of a power unit to cause the straddled vehicle 1 to travel. The swing unit 10 includes an engine 11 that rotates the rear wheel Rw and a transmission mechanism 12 that transmits the power of the engine 11 to the rear wheel Rw. The engine 11 is attached to the frame 2 via an anti-vibration link 9. The transmission mechanism 12 extends rearward from the engine 11. The rear wheel Rw is disposed on the right side of the transmission mechanism 12. The rear wheel Rw is rotatably supported by the transmission mechanism 12. The rear wheel Rw and the swing unit 10 are upward and downward swingable with respect to the frame 2 about a horizontal pivot axis Ap passing through the anti-vibration link 9 in the vehicle width direction.

The engine 11 includes a piston that reciprocates in accordance with the combustion of air-fuel mixture containing air and fuel and a crank shaft that rotates in accordance with the reciprocation of the piston about a horizontal rotation axis Ac extending in the vehicle width direction. The engine 11 further includes a cylinder that houses the piston therein, and a crank case that houses the crank shaft therein. The crank shaft is disposed at a position farther to the rear than a rear end of the front wheel Fw (It corresponds to a rear end of the tire Ft of the front wheel Fw. The same applies hereinafter.) and farther to the front than a front end of the rear wheel Rw (It corresponds to a front end of the tire Rt of the rear wheel Rw. The same applies hereinafter.). The rotation of the crank shaft is transmitted to the rear wheel Rw via the transmission mechanism 12. The transmission mechanism 12 includes a transmission (a CVT (Continuously Variable Transmission), for example) that transmits a rotation, which is transmitted from the engine 11, toward the rear wheel Rw while changing a speed of the rotation, and a transmission case that houses the transmission therein.

The straddled vehicle 1 includes a fuel tank 15 storing fuel to be supplied to the engine 11 and an air cleaner box 14 housing an element that removes foreign matter from air to be supplied to the engine 11. The air cleaner box 14 is disposed over the transmission case 13. The fuel tank 15 is disposed over the air cleaner box 14 in a side view. The fuel tank 15 is disposed under the seat 6. The fuel tank 15 is disposed behind a storage box 16 described below. The fuel tank 15 may be disposed under a foot board 27 described below.

The straddled vehicle 1 includes the storage box 16 in which an article such as a helmet is put. The article is put in the storage box 16 through an opening provided in an upper end portion of the storage box 16. The seat 6 is disposed over the storage box 16. The opening of the storage box 16 is opened and closed by the seat 6. The seat 6 is connected to the storage box 16 via a seat hinge. The seat 6 is turnable upward and downward with respect to the storage box 16. Fig. 1A shows a state in which the seat 6 is disposed at a closed position in which the opening of the storage box 16 is closed by the seat 6.

The straddled vehicle 1 includes a head lamp 17 that emits light forward and two front flashers 18 that flash in response to an operation by a driver. The straddled vehicle 1 further includes a tail lamp 20 that emits light rearward and two rear flashers 21 that flash in response to an operation by a driver. Fig. 1A shows an example in which the tail lamp 20 and the two rear flashers 21 are included in a rear lamp 19. The head lamp 17 and the front flashers 18 are disposed farther to the front than the front end 6f of the seat 6. The tail lamp 20 and the rear flashers 21 are disposed farther to the rear than the front end of the rear wheel Rw.

The straddled vehicle 1 includes the exterior cover forming an outer surface of the straddled vehicle 1. The exterior cover includes a handle cover 22 disposed in front of and behind the steering handle 7, a front cover 23 disposed in front of the head pipe 3, and a front fender 24 disposed over the front wheel Fw. The handle cover 22 turns rightward and leftward together with the steering handle 7. The front fender 24 turns rightward and leftward together with the front fork 8. When a driver moves the steering handle 7 rightward and leftward, the handle cover 22, the front fender 24, the front fork 8 and the front wheel Fw move rightward and leftward together with the steering handle 7.

The exterior cover further includes a leg shield 25 disposed in front of both legs of a driver sitting on the seat 6, and the foot board 27 on which both feet of the driver sitting on the seat 6 are placed. The foot board 27 is disposed below the front end 6f of the seat 6. The leg shield 25 extends upward from a front end portion of the foot board 27. The leg shield 25 is disposed farther to the front than the front end 6f of the seat 6. The leg shield 25 faces both legs of the driver sitting on the seat 6 in the front-rear direction. The leg shield 25 is disposed behind the front cover 23. The head pipe 3 is disposed between the front cover 23 and the leg shield 25 in the front-rear direction.

An upper surface of the foot board 27 includes a flat portion 27f that is flat from its right end to its left end. When the flat portion 27f is cut by a flat surface perpendicular to the front-rear direction, any portion of the flat portion 27f is disposed on a horizontal straight line extending in the vehicle width direction. In other words, a cross-section of the flat portion 27f taken along a flat surface perpendicular to the front-rear direction extends linearly in the vehicle width direction from a right end of the cross-section to a left end of the cross-section. The flat portion 27f may be a smooth and flat surface without unevenness or may be a substantially flat surface including recessed portions or convex portions that cannot affect placing feet thereon (e.g., recessed portions or convex portions within a range from 2 mm to 1 cm).

The exterior cover includes the pocket cover 26 forming together with the leg shield 25 a storage space in which an article is put. The pocket cover 26 is disposed farther to the front than the front end 6f of the seat 6. The pocket cover 26 is disposed behind the leg shield 25. The pocket cover 26 is attached to the leg shield 25. The storage space is formed between the leg shield 25 and the pocket cover 26 in the front-rear direction. The storage space extends downward from a take-in/take-out port formed between the leg shield 25 and the pocket cover 26 in the front-rear direction. An article is taken in or out from the storage space through the take-in/take-out port.

The exterior cover includes an under cover disposed under the foot board 27. The under cover includes a lower under cover 28 disposed under the foot board 27, and a pair of rear under covers 29 disposed under the foot board 27 and disposed behind the foot board 27. As shown in Fig. 1B, the pair of lower frames 5 are disposed between the foot board 27 and the lower under cover 28 in the up-down direction. The pair of rear under covers 29 are disposed on the right side and the left side of the pair of lower frames 5, respectively. The rear under cover 29 is disposed farther outward than the engine 11 in the vehicle width direction and overlaps the engine 11 in a side view.

The exterior cover includes a middle cover 30 disposed in front of the storage box 16, and a pair of side covers disposed on the right side and the left side of the storage box 16. The side cover includes an upper side cover 31 disposed under the seat 6 in a side view and a lower side cover 32 disposed under the upper side cover 31 in a side view. The upper side cover 31 and the lower side cover 32 are disposed outward of the storage box 16 in the vehicle width direction and overlap the storage box 16 in a side view.

The middle cover 30 extends upward from the foot board 27. The middle cover 30 is disposed under the seat 6. The middle cover 30 is disposed behind the leg shield 25 and faces the leg shield 25 in the front-rear direction. In a side view, the upper side cover 31 is disposed behind the middle cover 30. In a side view, the lower side cover 32 is disposed behind the upper side cover 31.

The exterior cover includes a rear fender 33 disposed in front of and behind the rear wheel Rw. The rear fender 33 includes a front board disposed over the rear wheel Rw, and a rear board extends obliquely rearward and downward from the front board. The front board is attached to the frame 2. The rear board is supported by the frame 2 via the front board. The front board and the rear board are disposed above the rear wheel Rw and overlap the rear wheel Rw in a plan view. In a side view, a rear end of the rear board, which corresponds to a rear end of the rear fender 33, is disposed farther to the rear than a rear end of the rear wheel Rw (It corresponds to a rear end of the tire Rt of the rear wheel Rw. The same applies hereinafter.). In a side view, the rear end of the rear board is disposed farther to the rear than a rear end 6r of the seat 6.

Next, the leg shield 25 and the pocket cover 26 will be described.

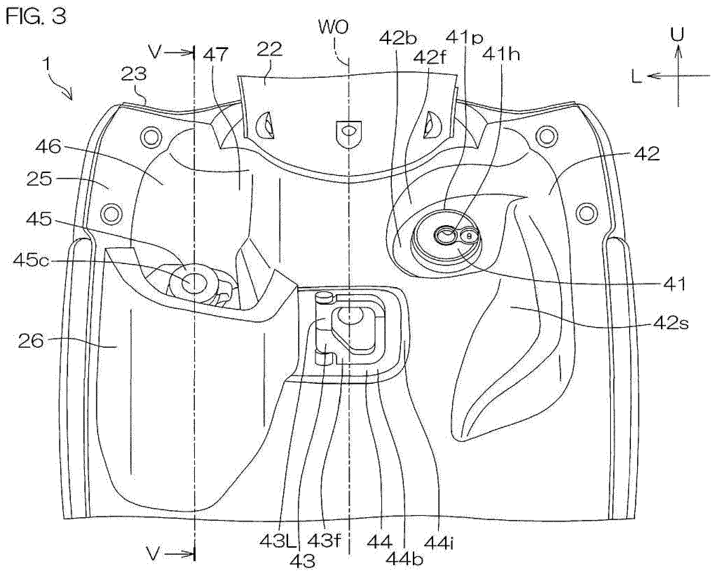

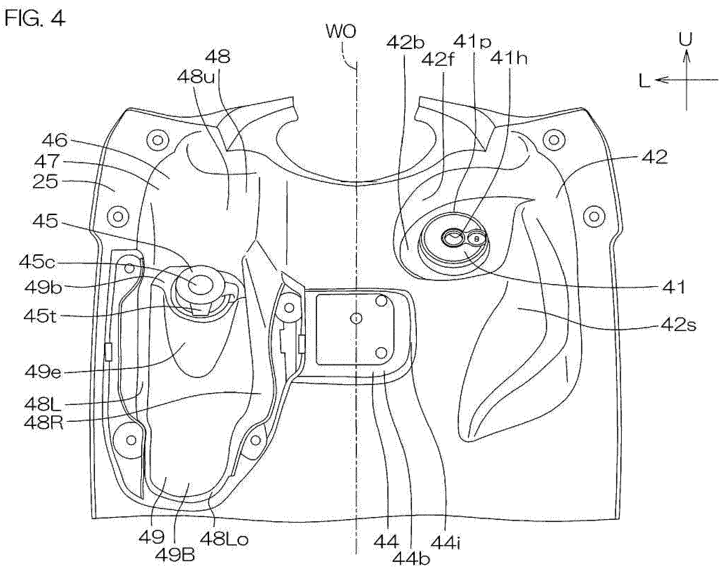

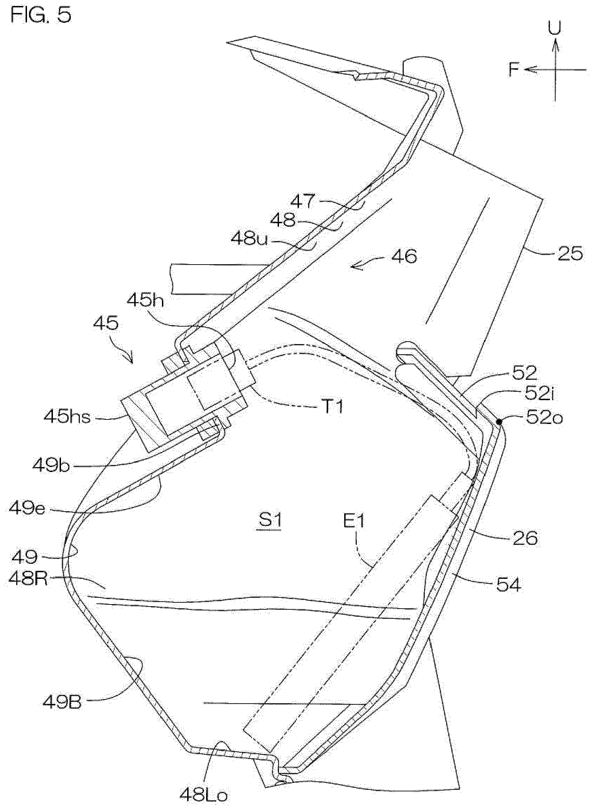

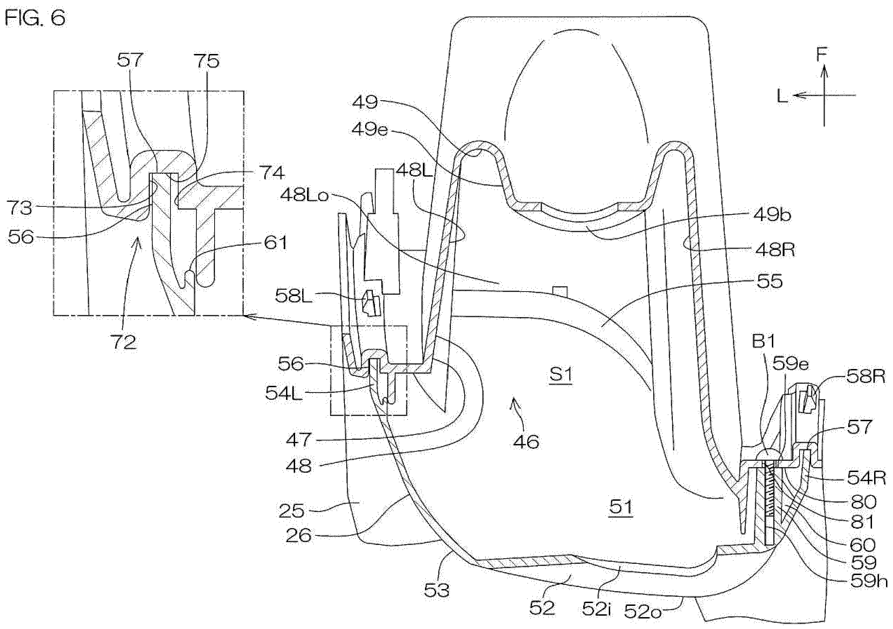

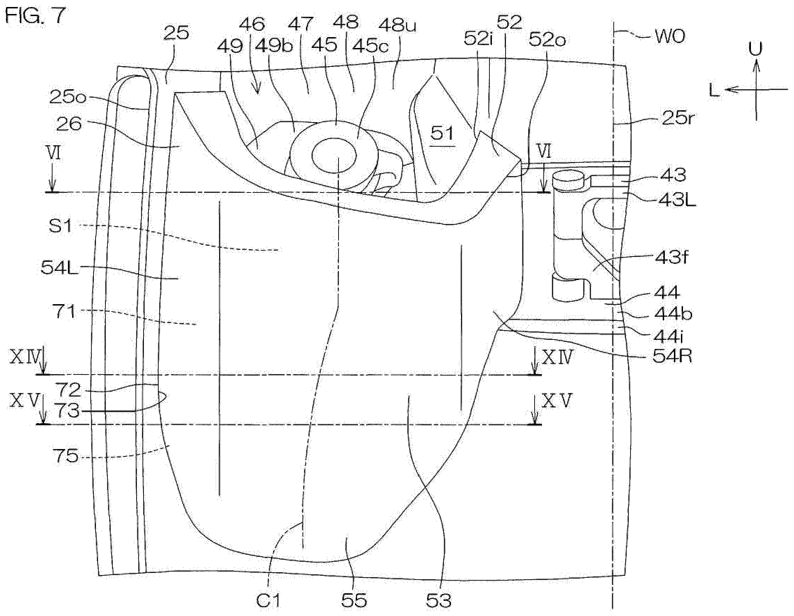

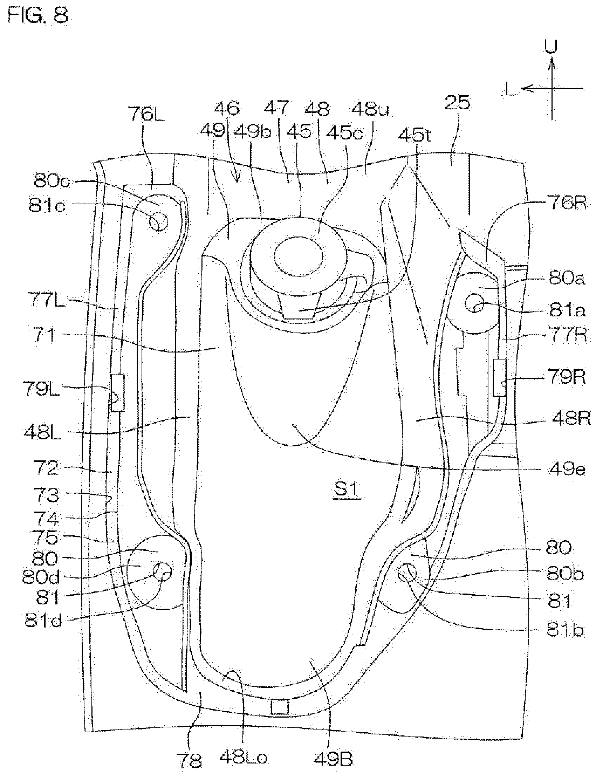

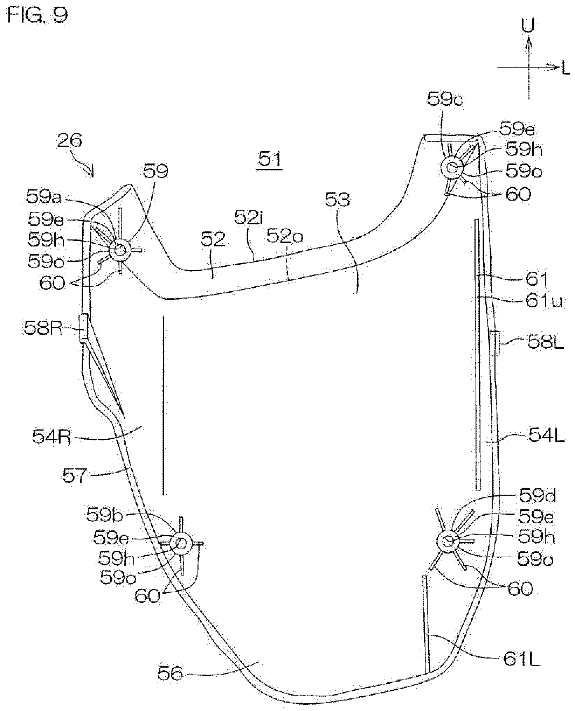

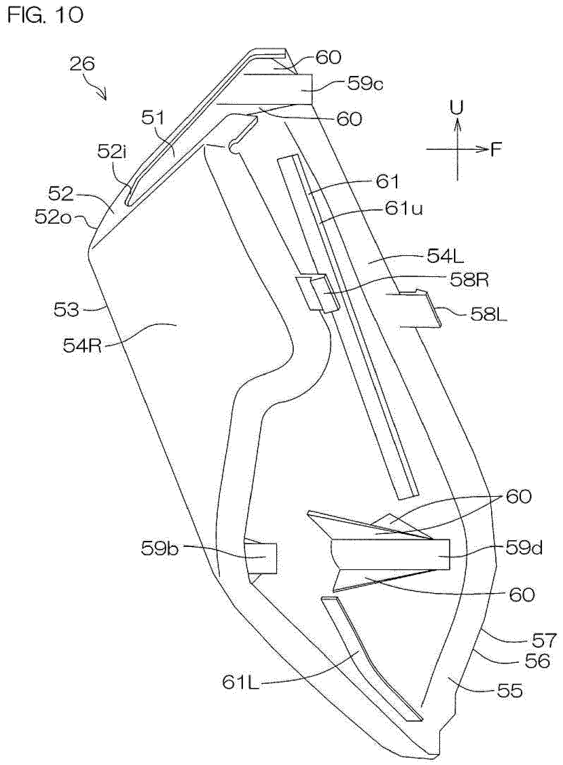

Fig. 3 is a rear view of the leg shield 25 and the pocket cover 26. Fig. 4 is a rear view of the leg shield 25 with the pocket cover 26 detached. Fig. 5 is a cross-sectional view showing a vertical cross-section of the leg shield 25, the pocket cover 26 and an electric power supply socket 45 taken along line V-V shown in Fig. 3. Fig. 6 is a cross-sectional view showing a horizontal cross-section of the leg shield 25 and the pocket cover 26 taken along line VI-VI shown in Fig. 7. Fig. 7 is an enlarged view of a portion of Fig. 3. Fig. 8 is an enlarged view of a portion of Fig. 4. Fig. 9 is a front view of the pocket cover 26. Fig. 10 is a right side view of the pocket cover 26. In Fig. 6, the electric power supply socket 45 is omitted.

As shown in Fig. 3, the straddled vehicle 1 includes a main switch 41 operated by a driver to start the engine 11, a convenience hook 43 on which a bag with a handle etc. is hung, and the electric power supply socket 45 to supply electric power of a battery. The main switch 41, the convenience hook 43 and the electric power supply socket 45 are attached to the leg shield 25. The electric power supply socket 45 is disposed between the leg shield 25 and the pocket cover 26 in the front-rear direction.

The leg shield 25 includes a right concave portion 42 in which the main switch 41 is disposed, a center concave portion 44 in which the convenience hook 43 is disposed, and a left concave portion 46 in which the electric power supply socket 45 is disposed. Each of the right concave portion 42, the center concave portion 44 and the left concave portion 46 are recessed forward from a rear surface of the leg shield 25. The right concave portion 42 is disposed on the right side of the vehicle center WO. The left concave portion 46 is disposed on the left side of the vehicle center WO. The center concave portion 44 is disposed between the left concave portion 46 and the right concave portion 42 in the vehicle width direction. The center concave portion 44 is disposed behind the head pipe 3 (refer to Fig. 1A) in a rear view.

The right concave portion 42 includes a seating surface 42b extending obliquely forward and upward from the rear surface of the leg shield 25, a front surface 42f extending upward from a front edge of the seating surface 42b, and a side surface 42s extending downward from a right edge of the seating surface 42b. The main switch 41 is inserted in a through hole penetrating the seating surface 42b and protrudes upward from the seating surface 42b. A switch panel 41p of the main switch 41 is exposed at the seating surface 42b. A main key is inserted in a key hole 41h provided in the switch panel 41p.

The center concave portion 44 includes an inner circumferential surface 44i extending forward from the rear surface of the leg shield 25 and a bottom surface 44b surrounded by the inner circumferential surface 44i in a rear view. The convenience hook 43 is disposed on the bottom surface 44b. The convenience hook 43 includes a hook 43f and a lever 43L turnable forward and rearward with respect to the leg shield 25. The lever 43L is disposed over the hook 43f. The lever 43L is turnable forward and rearward with respect to the leg shield 25 and movable with respect to the hook 43f.

As shown in Fig. 4, the left concave portion 46 includes an inner surface 47 recessed forward from the rear surface of the leg shield 25. The inner surface 47 of the left concave portion 46 includes an inner circumferential surface 48 extending forward from the rear surface of the leg shield 25 and a bottom surface 49 that closes the bottom of the inner circumferential surface 48. The electric power supply socket 45 is attached to a seating surface 49b provided in the bottom surface 49 of the left concave portion 46. The electric power supply socket 45 is inserted in a through hole penetrating the seating surface 49b and protrudes upward from the seating surface 49b.

The bottom surface 49 of the left concave portion 46 includes a bottom portion 49B surrounded by the inner circumferential surface 48 of the left concave portion 46 in a rear view, an expanding portion 49e extending obliquely rearward and upward from the bottom portion 49B, and the above-described seating surface 49b. The seating surface 49b is a flat surface extending obliquely forward and upward from an upper edge of the expanding portion 49e. The expanding portion 49e is a semicylinder-shaped curved surface extending obliquely forward and downward from an outer edge of the seating surface 49b to the bottom portion 49B. The expanding portion 49e is disposed behind a housing 45hs (refer to Fig. 5) of the electric power supply socket 45. The expanding portion 49e is disposed on a cylinder coaxial with the housing 45hs.

The inner circumferential surface 48 of the left concave portion 46 includes an upper portion 48u extending rearward from an upper edge of the bottom surface 49 of the left concave portion 46, a pair of side portions extending rearward from a right edge and a left edge of the bottom surface 49, and a lower portion 48Lo extending rearward from a lower edge of the bottom surface 49. One of the pair of side portions is a right side portion 48R extending rearward from the right edge of the bottom surface 49, and the other of the pair of side portions is a left side portion 48L extending rearward from the left edge of the bottom surface 49. The upper portion 48u is disposed above the seating surface 49b.

As shown in Fig. 5, the electric power supply socket 45 includes the bottomed and tubular housing 45hs that forms a terminal insertion hole 45h. A terminal T1 of a cable that connects an electric device E1 such as a cell phone to the electric power supply socket 45 is inserted in the terminal insertion hole 45h of the housing 45hs. As shown in Fig. 4, the electric power supply socket 45 further includes a cap 45c that opens and closes the terminal insertion hole 45h and a tab 45t that protrudes from an outer circumferential surface of the cap 45c in a radial direction of the cap 45c. When a user opens the cap 45c, the tab 45t is moved upward by a finger and/or a thumb of the user. When a user closes the cap 45c, the cap 45c or the tab 45t is pressed by a finger and/or a thumb of the user.

The cap 45c of the electric power supply socket 45 is disposed in the left concave portion 46. The cap 45c is disposed on the seating surface 49b. The pocket cover 26 is disposed farther to the rear than the cap 45c. A portion of the cap 45c is disposed between the leg shield 25 and the pocket cover 26 in the front-rear direction. A portion of the cap 45c overlaps the pocket cover 26 in a rear view and the remaining portion of the cap 45c does not overlap the pocket cover 26 in a rear view.

As shown in Fig. 6, the pocket cover 26 is fixed to the leg shield 25 by a fixing bolt B1 in a state in which a contacting end surface 57 of the pocket cover 26 is in contact with a seating surface 75 of the leg shield 25 and a fastening boss 59 of the pocket cover 26 is in contact with a seating surface 80 of the leg shield 25. A shaft portion of the fixing bolt B1 is inserted in the fastening boss 59 via the through hole 81 of the leg shield 25. An internal thread in which an external thread of the fixing bolt B1 is inserted may be formed in an inner circumferential surface of the fastening boss 59 or may be formed in an inner circumferential surface of an embedded nut embedded in the fastening boss 59. Fig. 6 shows an example of the former.

The maximum value of a width of the pocket cover 26 (a length in the vehicle width direction) is less than half a width of the leg shield 25. The pocket cover 26 is disposed on the left side of the vehicle center WO. Thus, the center C1 of the pocket cover 26 in the vehicle width direction (refer to Fig. 7) is disposed on the left side of the vehicle center WO. As long as the maximum value of the width of the pocket cover 26 is equal to or less than the width of the leg shield 25, the maximum value of the width of the pocket cover 26 may be equal to or more than half the width of the leg shield 25.

The pocket cover 26 includes a rear wall 53 that faces the leg shield 25 in the front-rear direction across an interval. As shown in Fig. 7, the pocket cover 26 further includes a pair of side walls extending forward from a right end and a left end of the rear wall 53 to the leg shield 25, and a lower wall 55 extending forward from a lower end of the rear wall 53 to the leg shield 25. One of the pair of side walls is a right side wall 54R extending forward from the right end of the rear wall 53 to the leg shield 25, and the other of the pair of side walls is a left side wall 54L extending forward from the left end of the rear wall 53 to the leg shield 25.

The pocket cover 26 further includes an upper wall 52 that forms the take-in/take-out port 51 through which an article to be put in the storage space S1 passes. The upper wall 52 is disposed over the storage space S1. The storage space S1 extends downward from the take-in/take-out port 51. The take-in/take-out port 51 is a portion of the storage space S1. The upper wall 52 includes a U-shaped inner edge 52i that forms the take-in/take-out port 51 together with the leg shield 25, and a U-shaped outer edge 52o disposed behind the inner edge 52i. The rear wall 53, the right side wall 54R and the left side wall 54L extend downward from the outer edge 52o of the upper wall 52. Instead of providing the upper wall 52, upper edges of the rear wall 53, the right side wall 54R and the left side wall 54L may form the take-in/take-out port 51.

As shown in Fig. 9, the contacting end surface 57 of the pocket cover 26 includes a front end surface of the right side wall 54R, a front end surface of the left side wall 54L, a front end surface of the lower wall 55, and a front end surface of the upper wall 52. That is, these front end surfaces are in contact with the leg shield 25. In contrast, the inner edge 52i of the upper wall 52 forming the take-in/take-out port 51 is not in contact with the leg shield 25 and is spaced rearward from the leg shield 25. An article is taken in or out from the storage space S1 through a space between the upper wall 52 and the leg shield 25 in the front-rear direction, that is, the take-in/take-out port 51.

The pocket cover 26 may include at least one insertion protrusion that protrudes forward from the contacting end surface 57 of the pocket cover 26. Fig. 9 and Fig. 10 show an example in which two insertion protrusions are provided in the pocket cover 26. In this example, the pocket cover 26 includes a right insertion protrusion 58R that protrudes forward from the front end surface of the right side wall 54R, and a left insertion protrusion 58L that protrudes forward from the front end surface of the left side wall 54L. As described below, the two insertion protrusions are inserted in insertion holes of the leg shield 25, respectively.

As shown in Fig. 9, the pocket cover 26 includes at least one fastening boss 59 that protrudes forward from an inner surface of the pocket cover 26. Fig. 9 shows an example in which four fastening bosses 59 are provided. The four fastening bosses 59 are composed of a right-upper fastening boss 59a, a right-lower fastening boss 59b, a left-upper fastening boss 59c, and a left-lower fastening boss 59d.

Each of the fastening bosses 59 has a tubular shape extending in the front-rear direction. Each of the fastening bosses 59 includes an end surface 59e in which an insertion hole 59h, in which the fixing bolt B1 is inserted, is open and an outer circumferential surface 59o extending forward from the inner surface of the pocket cover 26 to the end surface 59e. Each of the fastening bosses 59 is disposed farther inward than the contacting end surface 57 of the pocket cover 26 in the width direction of the pocket cover 26. In other words, each of the fastening bosses 59 is disposed between the front end surface of the right side wall 54R and the front end surface of the left side wall 54L in the vehicle width direction in a front view of the pocket cover 26.

The right-upper fastening boss 59a is disposed above the right-lower fastening boss 59b. The left-upper fastening boss 59c is disposed above the left-lower fastening boss 59d. The right-upper fastening boss 59a and the left-upper fastening boss 59c are disposed at heights substantially equal to each other and spaced apart from each other in the vehicle width direction. Similarly, the right-lower fastening boss 59b and the left-lower fastening boss 59d are disposed at heights substantially equal to each other and spaced apart from each other in the vehicle width direction.

The pocket cover 26 includes at least one plate-shaped reinforcing rib 60 that reinforces the fastening boss 59. Fig. 10 shows an example in which a plurality of the reinforcing ribs 60 are provided in each of the fastening bosses 59. The reinforcing rib 60 is a triangle or rectangle plate, for example. One side of the reinforcing rib 60 is connected to the outer circumferential surface 59o of the fastening boss 59, and another side of the reinforcing rib 60 is connected to the inner surface of the pocket cover 26. The displacement of the fastening boss 59 with respect to the inner surface of the pocket cover 26 is minimized or prevented by the reinforcing rib 60.

The pocket cover 26 includes at least one inner rib 61 that protrudes forward from the inner surface of the pocket cover 26. Fig. 9 and Fig. 10 show an example in which two inner ribs 61 are provided. One of the two inner ribs 61 is a left-upper rib 61u and the other of the two inner ribs 61 is a left-lower rib 61L. The left-upper rib 61u and the left-lower rib 61L are disposed farther to the left than the center C1 (refer to Fig. 7) of the pocket cover 26 in the width direction of the pocket cover 26. The left-upper rib 61u and the left-lower rib 61L are disposed at a left end portion of the pocket cover 26.

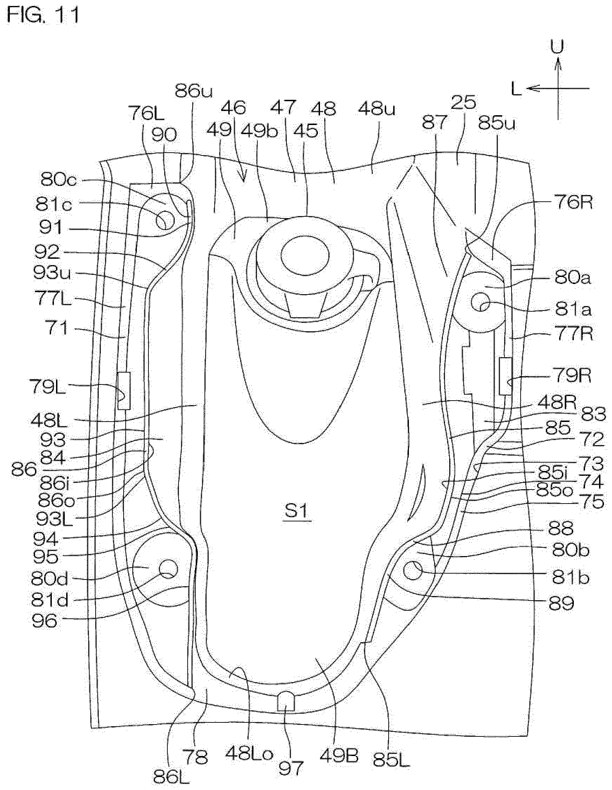

As shown in Fig. 9, the left-upper rib 61u is longer than the left-lower rib 61L in the up-down direction. An upper end of the left-upper rib 61u is disposed below the left-upper fastening boss 59c, and a lower end of the left-upper rib 61u is disposed above the left-lower fastening boss 59d. An upper end of the left-lower rib 61L is disposed below the left-lower fastening boss 59d. The left-upper rib 61u is disposed farther to the left than the left-upper fastening boss 59c and the left-lower fastening boss 59d. The left-lower rib 61L is disposed farther to the right than the left-lower fastening boss 59d. The left-upper rib 61u and the left-lower rib 61L are disposed farther outward than a left projecting wall 86 described below (refer to Fig. 11) in the width direction of the pocket cover 26.

As shown in Fig. 9, the leg shield 25 includes an overlap portion 71 that overlaps the pocket cover 26 in a rear view. The overlap portion 71 represents every portion of the leg shield 25 that overlaps the pocket cover 26 in a rear view. Thus, a large portion of the left concave portion 46 is included in the overlap portion 71. For example, the bottom portion 49B, the right side portion 48R, the left side portion 48L, and the lower portion 48Lo of the left concave portion 46 are included in the overlap portion 71. A portion of the seating surface 49b of the left concave portion 46 is also included in the overlap portion 71. The upper portion 48u of the left concave portion 46 does not overlap the pocket cover 26 in a rear view, and thus the upper portion 48u of the left concave portion 46 is not included in the overlap portion 71.

The overlap portion 71 of the leg shield 25 includes the seating surface 75 that is in contact with the contacting end surface 57 of the pocket cover 26. The seating surface 75 corresponds to an outer edge of the overlap portion 71. The seating surface 75 has a shape that coincides with the contacting end surface 57 of the pocket cover 26. The contacting end surface 57 of the pocket cover 26 is disposed behind the seating surface 75 and overlapped with the seating surface 75. Every portion of the contacting end surface 57 of the pocket cover 26 overlaps the seating surface 75 in a rear view.

The seating surface 75 of the leg shield 25 includes a right side portion 77R disposed on the right side of the storage space S1 in a rear view, a left side portion 77L disposed on the left side of the storage space S1 in a rear view, and a lower portion 78 disposed under the storage space S1 in a rear view. The lower portion 78 extends from a lower end of the right side portion 77R to a lower end of the left side portion 77L and connects the right side portion 77R and the left side portion 77L with each other. The seating surface 75 further includes a right upper portion 76R extending leftward from an upper end of the right side portion 77R, and a left upper portion 76L extending rightward from an upper end of the left side portion 77L. The right upper portion 76R is disposed on the right side of the storage space S1, and the left upper portion 76L is disposed on the left side of the storage space S1. The right upper portion 76R and the left upper portion 76L are spaced apart from each other in the vehicle width direction.

The right upper portion 76R and the right side portion 77R of the seating surface 75 are disposed on the right side of the left concave portion 46 of the leg shield 25 in a rear view. The left upper portion 76L and the left side portion 77L of the seating surface 75 are disposed on the left side of the left concave portion 46 of the leg shield 25 in a rear view. The lower portion 78 of the seating surface 75 is disposed under the left concave portion 46 of the leg shield 25 in a rear view. The upper end of the right side portion 77R is disposed above a right-upper through hole 81a described below. The upper end of the left side portion 77L is disposed above a left-upper through hole 81c described below.

In a case in which the at least one insertion protrusion is provided in the pocket cover 26, an insertion hole, the number of which is the same as that of the insertion protrusion, is formed in the seating surface 75. Fig. 8 shows an example in which two insertion holes are formed. One of the two insertion holes is a right insertion hole 79R penetrating the right side portion 77R of the seating surface 75 in the front-rear direction, and the other of the two insertion holes is a left insertion hole 79L penetrating the left side portion 77L of the seating surface 75 in the front-rear direction. The right insertion protrusion 58R of the pocket cover 26 is inserted in the right insertion hole 79R, and the left insertion protrusion 58L of the pocket cover 26 is inserted in the left insertion hole 79L. The insertion protrusion is restricted from moving with respect to the insertion hole by the contact between an outer circumferential surface of the insertion protrusion and an inner circumferential surface of the insertion hole. Thus, the movement of the pocket cover 26 with respect to the leg shield 25 is restricted.

As shown in Fig. 6, the leg shield 25 forms a fitting groove 72 in which an edge 56 of the pocket cover 26 including the contacting end surface 57 is inserted. The seating surface 75 of the leg shield 25 is included in an inner surface of the fitting groove 72. That is, the inner surface of the fitting groove 72 includes the seating surface 75 that forms a bottom of the fitting groove 72, a groove outer side surface 73 that extends rearward from an outer edge of the seating surface 75 corresponding to a groove bottom surface, and a groove inner side surface 74 that extends rearward from an inner edge of the seating surface 75.

The edge 56 of the pocket cover 26 is disposed between the groove outer side surface 73 and the groove inner side surface 74. The groove outer side surface 73 is disposed outside the pocket cover 26. The groove inner side surface 74 is disposed inside the pocket cover 26. The groove outer side surface 73 faces an outer surface of the pocket cover 26. The groove inner side surface 74 faces the inner surface of the pocket cover 26. As shown in Fig. 7, the groove outer side surface 73 is disposed not only on the right side and the left side of the pocket cover 26, but also on the upper side and the lower side of the pocket cover 26. Thus, the groove outer side surface 73 restricts the pocket cover 26 from moving in the vehicle width direction and the up-down direction with respect to the leg shield 25.

The groove outer side surface 73 of the fitting groove 72 may be provided in an entire outer edge of the seating surface 75 or may be provided only in a portion of the outer edge of the seating surface 75. Similarly, the groove inner side surface 74 of the fitting groove 72 may be provided in an entire inner edge of the seating surface 75 or may be provided only in a portion of the inner edge of the seating surface 75. Fig. 8 shows an example in which the groove outer side surface 73 is provided in every portion of the outer edge of the seating surface 75 and the groove inner side surface 74 is provided only in a portion of the inner edge of the seating surface 75.

As shown in Fig. 8, the leg shield 25 includes a plurality of seating surfaces 80 that are in contact with a plurality of the fastening bosses 59 of the pocket cover 26, and a plurality of through holes 81 that penetrate the plurality of seating surfaces 80 in the front-rear direction. The number of the through holes 81 is equal to the number of the fastening bosses 59 of the pocket cover 26, and the number of the seating surfaces 80 is equal to the number of the through holes 81. The seating surface 80 is a flat surface larger than the end surface 59e of the fastening boss 59. Each of the seating surfaces 80 is disposed inward of the seating surface 75 in the width direction of the pocket cover 26.

Fig. 8 shows an example in which four seating surfaces 80 and four through holes 81 are provided. The four seating surfaces 80 and the four through holes 81 correspond one-to-one with each other. The four seating surfaces 80 are composed of a right-upper seating surface 80a, a right-lower seating surface 80b, a left-upper seating surface 80c, and a left-lower seating surface 80d. The four through holes 81 are composed of a right-upper through hole 81a, a right-lower through hole 81b, a left-upper through hole 81c, and a left-lower through hole 81d.

The right-upper seating surface 80a, the right-lower seating surface 80b, the right-upper through hole 81a, and the right-lower through hole 81b are disposed on the right side of the storage space S1 in a rear view. The right-upper seating surface 80a and the right-upper through hole 81a are disposed above the right-lower through hole 81b and the right-lower seating surface 80b. Similarly, the left-upper seating surface 80c, the left-lower seating surface 80d, the left-upper through hole 81c, and the left-lower through hole 81d are disposed on the left side of the storage space S1 in a rear view. The left-upper seating surface 80c and the left-upper through hole 81c are disposed above the left-lower through hole 81d and the left-lower seating surface 80d.

The right-upper through hole 81a and the left-upper through hole 81c are disposed above the right insertion hole 79R and the left insertion hole 79L that are open in the seating surface 75. The right-lower through hole 81b and the left-lower through hole 81d are disposed below the right insertion hole 79R and the left insertion hole 79L. The left-upper through hole 81c is disposed above the right-upper through hole 81a. The right-upper through hole 81a is disposed above the left-lower through hole 81d. The left-lower through hole 81d is disposed at a height equal or substantially equal to the right-lower through hole 81b. The right-upper through hole 81a is disposed farther outward than the right-lower through hole 81b in the width direction of the pocket cover 26.

As shown in Fig. 6, the pocket cover 26 is fixed to the leg shield 25 at a fixed position (a position of the pocket cover 26 shown in Fig. 6). The fixed position is an area in which the pocket cover 26 fixed to the leg shield 25 is disposed. When the edge 56 of the pocket cover 26 is fitted in the fitting groove 72 of the leg shield 25, the pocket cover 26 is disposed at the fixed position and restricted from moving in the vehicle width direction and the up-down direction with respect to the fixed position by the groove outer side surface 73 of the leg shield 25.

Furthermore, when the edge 56 of the pocket cover 26 is fitted in the fitting groove 72 of the leg shield 25, the end surfaces 59e of the plurality of fastening bosses 59 of the pocket cover 26 are placed on the plurality of seating surfaces 80 of the leg shield 25, respectively. At the same time, the insertion hole 59h of the fastening boss 59 is disposed behind the through hole 81 of the leg shield 25. When viewed in an axial direction of the fastening boss 59 (a direction of a center line of the insertion hole 59h), the entire insertion hole 59h overlaps the through hole 81 of the leg shield 25.

In this state, the shaft portion of the fixing bolt B1 is inserted in the insertion hole 59h of the fastening boss 59 via the through hole 81 of the leg shield 25 and attached to the fastening boss 59. Thus, the plurality of fastening bosses 59 are pulled forward toward the leg shield 25, and the leg shield 25 is sandwiched between the fastening boss 59 and a head portion of the fixing bolt B1 in the front-rear direction. As a result, the pocket cover 26 is fixed to the leg shield 25 at the fixed position. When all the fixing bolts B1 are loosened, the pocket cover 26 can be removed from the leg shield 25.

Next, a projecting wall of the leg shield 25 will be described.

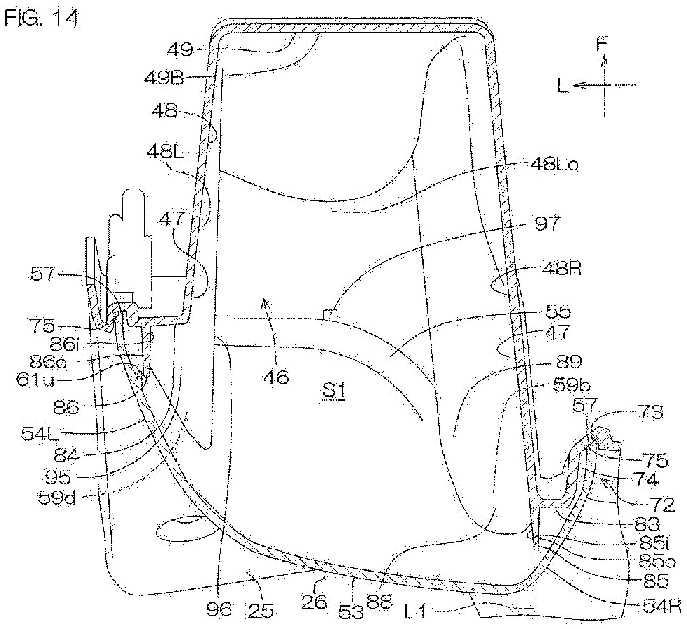

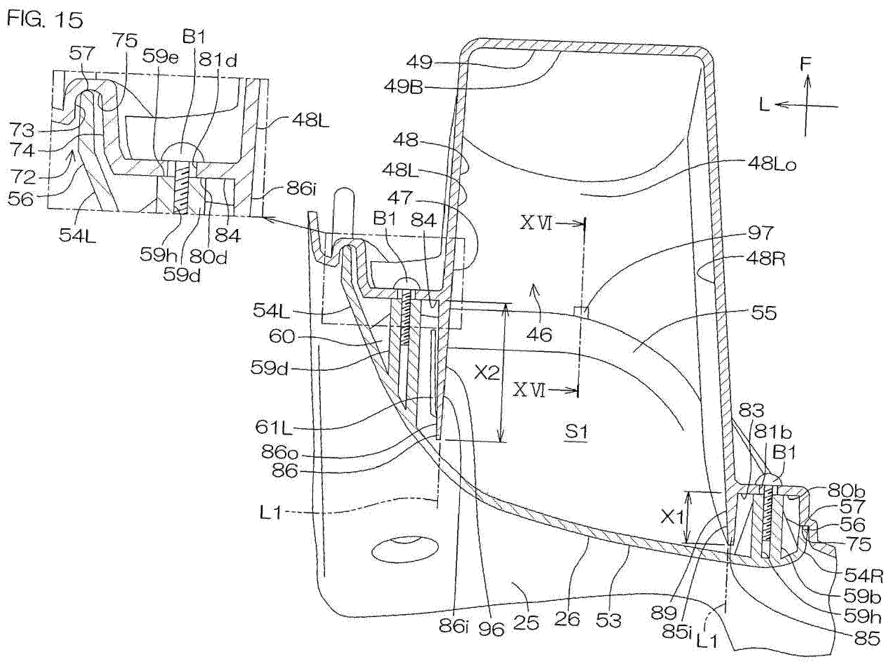

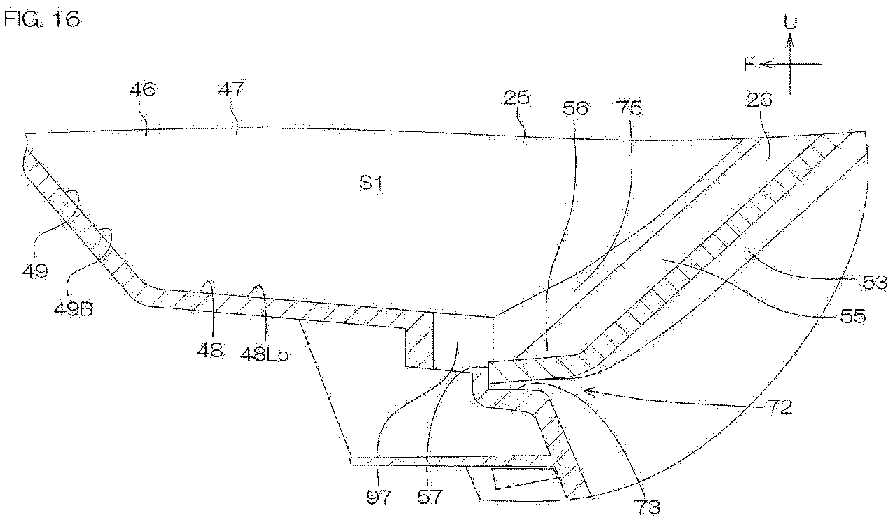

Fig. 11, Fig. 12, and Fig. 13 are a rear view, a perspective view, and a left side view of the leg shield 25 with the pocket cover 26 detached, respectively. Fig. 14 is a cross-sectional view showing horizontal cross-sections of the leg shield 25 and the pocket cover 26 taken along line XIV-XIV shown in Fig. 7. Fig. 15 is a cross-sectional view showing horizontal cross-sections of the leg shield 25 and the pocket cover 26 taken along line XV-XV shown in Fig. 7. Fig. 16 is a cross-sectional view showing vertical cross-sections of the leg shield 25 and the pocket cover 26 taken along line XVI-XVI shown in Fig. 15.

As shown in Fig. 11, the overlap portion 71 of the leg shield 25 includes at least one adjacent portion that is disposed inward of the seating surface 75 of the pocket cover 26 in the width direction and adjacent to the seating surface 75. Fig. 11 shows an example in which two adjacent portions are provided. One of the two adjacent portions is a right adjacent portion 83 that is adjacent to an inner edge of the right side portion 77R of the seating surface 75, and the other of the two adjacent portions is a left adjacent portion 84 that is adjacent to an inner edge of the left side portion 77L of the seating surface 75.

The right adjacent portion 83 is a portion located between the right side portion 77R of the seating surface 75 and the left concave portion 46 in the vehicle width direction in a rear view. The right-upper seating surface 80a, the right-lower seating surface 80b, the right-upper through hole 81a, and the right-lower through hole 81b are provided in the right adjacent portion 83. The right adjacent portion 83 extends upward and downward along the inner edge of the right side portion 77R in a rear view. The right adjacent portion 83 extends leftward from the inner edge of the right side portion 77R. An outer edge of the right adjacent portion 83 overlaps the inner edge of the right side portion 77R in a rear view. The groove inner side surface 74 of the fitting groove 72 extends rearward from the inner edge of the right side portion 77R to the outer edge of the right adjacent portion 83. Thus, the right adjacent portion 83 is disposed farther to the rear than the right side portion 77R.

The left adjacent portion 84 is a portion located between the left side portion 77L of the seating surface 75 and the left concave portion 46 in the vehicle width direction in a rear view. The left-upper seating surface 80c, the left-lower seating surface 80d, the left-upper through hole 81c, and the left-lower through hole 81d are provided in the left adjacent portion 84. The left adjacent portion 84 extends upward and downward along the inner edge of the left side portion 77L in a rear view. The left adjacent portion 84 extends rightward from the inner edge of the left side portion 77L. An outer edge of the left adjacent portion 84 overlaps the inner edge of the left side portion 77L in a rear view. The groove inner side surface 74 of the fitting groove 72 extends rearward from the inner edge of the left side portion 77L to the outer edge of the left adjacent portion 84. Thus, the left adjacent portion 84 is disposed farther to the rear than the left side portion 77L.

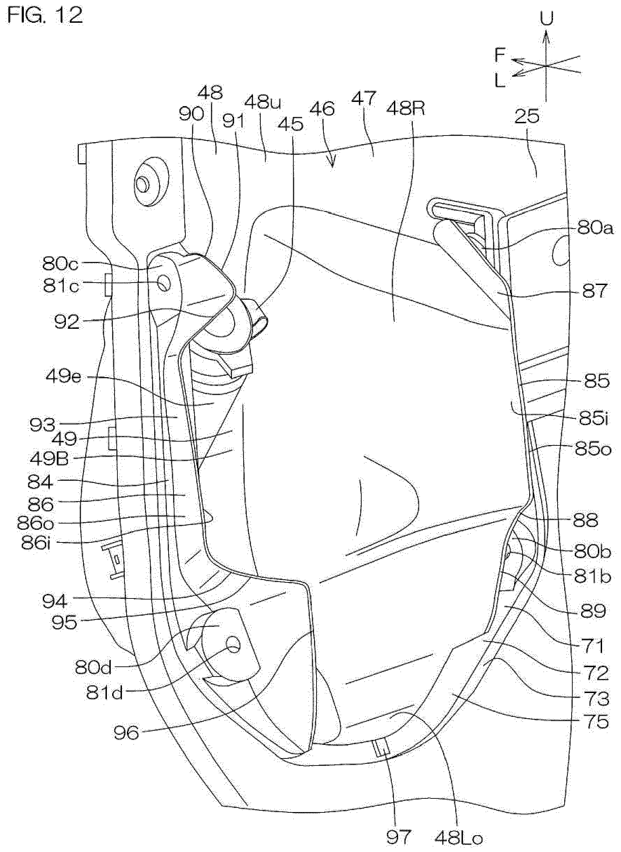

As shown in Fig. 12, the leg shield 25 includes at least one projecting wall that projects rearward from the overlap portion 71. Fig. 12 shows an example in which two projecting walls are provided. One of the projecting walls is a right projecting wall 85 disposed on the right side of the storage space S1 in a rear view, the other of the projecting walls is the left projecting wall 86 disposed on the left side of the storage space S1 in a rear view. The right projecting wall 85 projects rearward from the above-described right adjacent portion 83. The left projecting wall 86 projects rearward from the above-described left adjacent portion 84. The right projecting wall 85 and the left projecting wall 86 are integral with the overlap portion 71.

As shown in Fig. 11, the right projecting wall 85 is a portion located farther to the rear than the right adjacent portion 83. The right projecting wall 85 is disposed farther to the rear than the seating surface 75. The right projecting wall 85 is disposed farther inward than the seating surface 75 in the width direction of the pocket cover 26. The right-upper seating surface 80a, the right-lower seating surface 80b, the right-upper through hole 81a, and the right-lower through hole 81b are disposed between the right projecting wall 85 and the right side portion 77R of the seating surface 75 in the vehicle width direction in a rear view.

Similarly, the left projecting wall 86 is a portion located farther to the rear than the left adjacent portion 84. The left projecting wall 86 is disposed farther to the rear than the seating surface 75. The left projecting wall 86 is disposed farther inward than the seating surface 75 in the width direction of the pocket cover 26. The right-upper seating surface 80a, the right-lower seating surface 80b, the right-upper through hole 81a, and the right-lower through hole 81b are disposed between the left projecting wall 86 and the left side portion 77L of the seating surface 75 in the vehicle width direction in a rear view.

The left concave portion 46 of the leg shield 25 is disposed between the right projecting wall 85 and the left projecting wall 86 in the vehicle width direction in a rear view. The shortest distance from a right end of the seating surface 75 to the right projecting wall 85 in the vehicle width direction is shorter than the shortest distance from the right projecting wall 85 to the left projecting wall 86 in the vehicle width direction. Similarly, the shortest distance from a left end of the seating surface 75 to the left projecting wall 86 in the vehicle width direction is shorter than the shortest distance from the right projecting wall 85 to the left projecting wall 86 in the vehicle width direction.

An upper end 85u of the right projecting wall 85 is disposed above the right-upper through hole 81a. A lower end 85L of the right projecting wall 85 is disposed below the right-lower through hole 81b. The right projecting wall 85 includes a right-upper inner portion 87 disposed inward of the right-upper through hole 81a in the width direction of the pocket cover 26 in a rear view, and a right-lower inner portion 89 disposed inward of the right-lower through hole 81b in the width direction of the pocket cover 26 in a rear view. The right projecting wall 85 further includes a right-lower upper portion 88 disposed over the right-lower through hole 81b in a rear view.

A portion of the right-upper inner portion 87 is disposed at a height equal to the right-upper through hole 81a in a rear view. Similarly, a portion of the right-lower inner portion 89 is disposed at a height equal to the right-lower through hole 81 in a rear view. A portion of the right-lower upper portion 88 is located directly above the right-lower through hole 81b in a rear view. More specifically, a portion of the right-lower upper portion 88 is disposed at a position farther to the left than the right end of the right-lower through hole 81b and farther to the right than the left end of the right-lower through hole 81b in a rear view.

An upper end 86u of the left projecting wall 86 is disposed above the left-upper through hole 81c. A lower end 86L of the left projecting wall 86 is disposed below the left-lower through hole 81d. The left projecting wall 86 includes a left-upper inner portion 91 disposed inward of the left-upper through hole 81c in the width direction of the pocket cover 26 in a rear view, and a left-lower inner portion 96 disposed inward of the left-lower through hole 81d in the width direction of the pocket cover 26 in a rear view. the left projecting wall 86 further includes a left-upper lower portion 92 disposed under the left-upper through hole 81c in a rear view, and a left-lower upper portion 95 disposed over the left-lower through hole 81d in a rear view.

A portion of the left-upper inner portion 91 is disposed at a height equal to the left-upper through hole 81c in a rear view. Similarly, a portion of the left-lower inner portion 96 is disposed at a height equal to the left-lower through hole 81d in a rear view. A portion of the left-upper lower portion 92 is located directly below the left-upper through hole 81c in a rear view. A portion of the left-lower upper portion 95 is located directly above the left-lower through hole 81d in a rear view. More specifically, a portion of the left-upper lower portion 92 is disposed at a position farther to the left than the right end of the left-upper through hole 81c and farther to the right than the left end of the left-upper through hole 81c in a rear view. A portion of the left-lower upper portion 95 is disposed at a position farther to the left than the right end of the left-lower through hole 81d and farther to the right than the left end of the left-lower through hole 81d in a rear view.

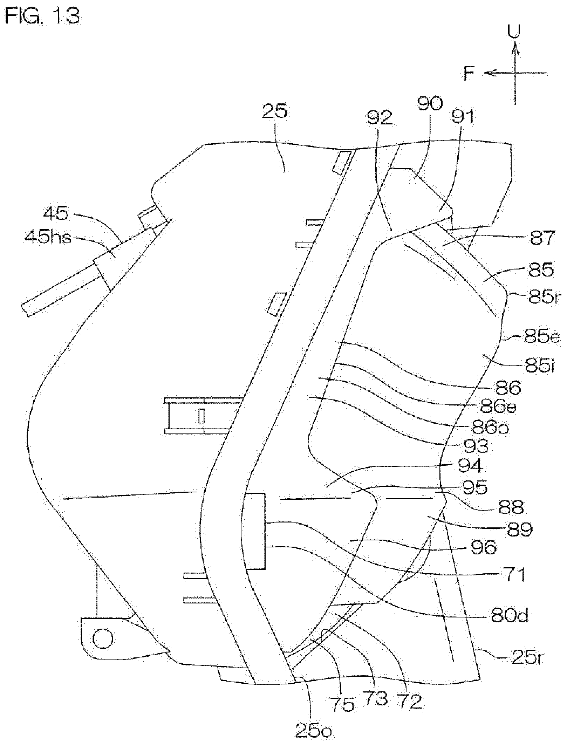

As shown in Fig. 13, every portion of a rear edge 85e of the right projecting wall 85 is disposed farther to the rear than an outer edge 25o of the leg shield 25 in the vehicle width direction (refer to Fig. 7) in a side view. The rear edge 85e of the right projecting wall 85 has a forward and rearward wavy shape in a side view. Similarly, every portion of a rear edge 86e of the left projecting wall 86 is disposed farther to the rear than the outer edge 25o of the leg shield 25 in the vehicle width direction (refer to Fig. 7) in a side view. The rear edge 86e of the left projecting wall 86 has a forward and rearward wavy shape in a side view. A portion of the rear edge 85e of the right projecting wall 85 is disposed farther to the rear than a rear edge 25r of the leg shield 25 in a side view (a portion overlapping an alternate long and short dash line representing the vehicle center WO in Fig. 7). In a side view, the rear end 85r of the right projecting wall 85 is disposed farther to the rear than every portion of the left projecting wall 86.

The left projecting wall 86 includes an upper high portion 90 having a long length in a rear direction from the overlap portion 71, a low portion 93 having a short length in the rear direction from the overlap portion 71, and a lower high portion 94 having a long length in the rear direction from the overlap portion 71. The above-described left-upper inner portion 91 and left-upper lower portion 92 are included in the upper high portion 90. The above-described left-lower inner portion 96 and left-lower upper portion 95 are included in the lower high portion 94. The upper high portion 90 is disposed above the low portion 93. The lower high portion 94 is disposed below the low portion 93. A projecting amount of the upper high portion 90 from the overlap portion 71 is greater than a projecting amount of the low portion 93 from the overlap portion 71. A projecting amount of the lower high portion 94 from the overlap portion 71 is greater than the projecting amount of the low portion 93 from the overlap portion 71.

As shown in Fig. 11, the low portion 93 of the left projecting wall 86 is disposed farther outward than the upper high portion 90 and the lower high portion 94 of the left projecting wall 86 in the width direction of the pocket cover 26 in a rear view. The shortest distance from the seating surface 75 to the low portion 93 in the vehicle width direction is shorter than the shortest distance from the seating surface 75 to the upper high portion 90 in the vehicle width direction and shorter than the shortest distance from the seating surface 75 to the lower high portion 94 in the vehicle width direction. The low portion 93 is longer than the upper high portion 90 in the up-down direction. The low portion 93 is longer than the lower high portion 94 in the up-down direction. An upper end 93u of the low portion 93 is disposed below the left-upper through hole 81c. A lower end 93L of the low portion 93 is disposed above the left-lower through hole 81d.

As shown in Fig. 14, each of the right projecting wall 85 and the left projecting wall 86 is a solid plate. A thickness of the right projecting wall 85 (a length in the vehicle width direction) may decrease continuously or in stages as a rear end of the right projecting wall 85 is approached or may be constant from a front end of the right projecting wall 85 to the rear end of the right projecting wall 85. The same applies to the left projecting wall 86. Fig. 14 shows an example in which the thickness of the right projecting wall 85 decreases continuously as the rear end of the right projecting wall 85 is approached, and a thickness of the left projecting wall 86 decreases continuously as a rear end of the left projecting wall 86 is approached.

In a cross-section shown in Fig. 15, a projecting amount of the right projecting wall 85 is smaller than a projecting amount of the left projecting wall 86. That is, a distance X1 from the right-lower seating surface 80b to the rear end of the right projecting wall 85 in the front-rear direction is shorter than a distance X2 from the left-lower seating surface 80d the rear end of the left projecting wall 86 in the front-rear direction. The distance X2 is shorter than a gap between the right projecting wall 85 and the left projecting wall 86 in the vehicle width direction. The distance X1 is longer than the shortest distance from a center of the right-lower fastening boss 59b to the right projecting wall 85 in the vehicle width direction. The distance X2 is longer than the shortest distance from a center of the left-lower fastening boss 59d to the left projecting wall 86 in the vehicle width direction.

The right projecting wall 85 and the left projecting wall 86 are disposed in front of the pocket cover 26. The right projecting wall 85 and the left projecting wall 86 are not in contact with the inner surface of the pocket cover 26 and are spaced forward from the inner surface of the pocket cover 26. The right projecting wall 85 and the left projecting wall 86 form the storage space S1 together with the pocket cover 26 and the left concave portion 46 of the leg shield 25. That is, an outline of the storage space S1 is formed by the right projecting wall 85, the left projecting wall 86, the pocket cover 26, and the left concave portion 46.

The bottom surface 49 of the left concave portion 46 of the leg shield 25 is disposed in front of the storage space S1. The pocket cover 26 is disposed behind the storage space S1. The right projecting wall 85 and the right side portion 48R of the left concave portion 46 are disposed on the right side of the storage space S1. The left projecting wall 86 and the left side portion 48L of the left concave portion 46 are disposed on the left side of the storage space S1. The lower portion 48Lo of the left concave portion 46 is disposed under the storage space S1. Thus, an article in the storage space S1 could come into contact with the right projecting wall 85, the left projecting wall 86, the pocket cover 26, and the left concave portion 46.

As shown in Fig. 14, an inner surface 85i and an outer surface 85o of the right projecting wall 85 in the width direction of the pocket cover 26 are disposed between the leg shield 25 and the pocket cover 26. The inner surface 85i of the right projecting wall 85 forms the storage space S1 at a position between the leg shield 25 and the pocket cover 26. In contrast, the outer surface 85o of the right projecting wall 85 does not form the storage space S1 and is disposed on an opposite side of the storage space S1 with respect to the inner surface 85i of the right projecting wall 85. The outer surface 85o of the right projecting wall 85 faces the inner surface of the pocket cover 26 in the width direction of the pocket cover 26.

Similarly, an inner surface 86i and an outer surface 86o of the left projecting wall 86 in the width direction of the pocket cover 26 are disposed between the leg shield 25 and the pocket cover 26. The inner surface 86i of the left projecting wall 86 forms the storage space S1 at a position between the leg shield 25 and the pocket cover 26. In contrast, the outer surface 86o of the left projecting wall 86 does not form the storage space S1 and is disposed on an opposite side of the storage space S1 with respect to the inner surface 86i of the left projecting wall 86. The outer surface 86o of the left projecting wall 86 faces the inner surface of the pocket cover 26 in the width direction of the pocket cover 26.

In each of cross-sections shown in Fig. 14 and Fig. 15, the inner surface 85i of the right projecting wall 85 and the inner surface 47 of the left concave portion 46 are disposed on a straight line. That is, the inner surface 85i of the right projecting wall 85 is connected to the inner surface 47 of the left concave portion 46 not via the right adjacent portion 83 and disposed on a straight line L1 that is an extended line of the inner surface 47 of the left concave portion 46 and that extends rearward from the inner surface 47 of the left concave portion 46. In each of the cross-sections shown in Fig. 14 and Fig. 15, the inner surface 85i of the right projecting wall 85 and the inner surface 47 of the left concave portion 46 may be disposed on two straight lines, respectively.

Similarly, in a cross-section shown in Fig. 15, the inner surface 86i of the left projecting wall 86 and the inner surface 47 of the left concave portion 46 are disposed on a straight line. In contrast, in a cross-section shown in Fig. 14, the inner surface 86i of the left projecting wall 86 and the inner surface 47 of the left concave portion 46 are disposed on two straight lines, respectively. That is, the inner surface 86i of the left projecting wall 86 is connected to the inner surface 47 of the left concave portion 46 via the left adjacent portion 84 and disposed farther outward than the inner surface 47 of the left concave portion 46 in the width direction of the pocket cover 26. In the cross-section shown in Fig. 15, the inner surface 86i of the left projecting wall 86 and the inner surface 47 of the left concave portion 46 may be disposed on a straight line.

As shown in Fig. 15, the right-lower inner portion 89 of the right projecting wall 85 is disposed inward of the right-lower fastening boss 59b in the width direction of the pocket cover 26. In other words, the right-lower inner portion 89 is disposed on a left side of the right-lower fastening boss 59b and faces the right-lower fastening boss 59b in the vehicle width direction. The right-lower inner portion 89 is not in contact with the right-lower fastening boss 59b and is spaced apart from the right-lower fastening boss 59b in the vehicle width direction. The right-lower fastening boss 59b is disposed between the right-lower inner portion 89 and the seating surface 75 in the vehicle width direction.

Similarly, the left-lower inner portion 96 of the left projecting wall 86 is disposed inward of the left-lower fastening boss 59d in the width direction of the pocket cover 26. In other words, the left-lower inner portion 96 is disposed on a right side of the left-lower fastening boss 59d and faces the left-lower fastening boss 59d in the vehicle width direction. The left-lower inner portion 96 is not in contact with the left-lower fastening boss 59d and is spaced apart from the left-lower fastening boss 59d in the vehicle width direction. The left-lower fastening boss 59d is disposed between the left-lower inner portion 96 and the seating surface 75 in the vehicle width direction.

As shown in Fig. 14, the right-lower upper portion 88 of the right projecting wall 85 is disposed over the right-lower fastening boss 59b and overlaps the right-lower fastening boss 59b in a plan view. The right-lower upper portion 88 is not in contact with the right-lower fastening boss 59b and is spaced upward from the right-lower fastening boss 59b. Similarly, the left-lower upper portion 95 of the left projecting wall 86 is disposed over the left-lower fastening boss 59d and overlaps the left-lower fastening boss 59d in a plan view. The left-lower upper portion 95 is not in contact with the left-lower fastening boss 59d and is spaced upward from the left-lower fastening boss 59d.

Although not shown, the right-upper inner portion 87 of the right projecting wall 85 is disposed inward of the right-upper fastening boss 59a in the width direction of the pocket cover 26. Similarly, the left-upper inner portion 91 of the left projecting wall 86 is disposed inward of the left-upper fastening boss 59c in the width direction of the pocket cover 26. The left-upper lower portion 92 of the left projecting wall 86 is disposed under the left-upper fastening boss 59c and overlaps the right-lower fastening boss 59b in a plan view. The left-upper lower portion 92 is not in contact with the left-upper fastening boss 59c and is spaced downward from the left-upper fastening boss 59c.

As shown in Fig. 14, the left-upper rib 61u of the pocket cover 26 is disposed farther outward than the left projecting wall 86 in the width direction of the pocket cover 26. The left-upper rib 61u is disposed between the seating surface 75 and the left projecting wall 86 in the vehicle width direction. The left-upper rib 61u is disposed behind the left adjacent portion 84. The left-upper rib 61u is not in contact with the left adjacent portion 84 and is spaced rearward from the left adjacent portion 84. In a cross-section shown in Fig. 14, the left-upper rib 61u is shorter than the left projecting wall 86 in the front-rear direction. The left-upper rib 61u overlaps the left projecting wall 86 in a side view. The left-upper rib 61u may be in contact with the left projecting wall 86 or may be spaced apart from the left projecting wall 86 in the vehicle width direction.

Similarly, as shown in Fig. 15, the left-lower rib 61L of the pocket cover 26 is disposed farther outward than the left projecting wall 86 in the width direction of the pocket cover 26. The left-lower rib 61L is disposed between the seating surface 75 and the left projecting wall 86 in the vehicle width direction. The left-lower rib 61L is disposed behind the left adjacent portion 84. The left-lower rib 61L is not in contact with the left adjacent portion 84 and is spaced rearward from the left adjacent portion 84. In a cross-section shown in Fig. 15, the left-lower rib 61L is shorter than the left projecting wall 86 in the front-rear direction. The left-lower rib 61L overlaps the left projecting wall 86 in a side view. The left-lower rib 61L may be in contact with the left projecting wall 86 or may be spaced apart from the left projecting wall 86 in the vehicle width direction.

As shown in Fig. 16, at least one of the leg shield 25 and the pocket cover 26 may include a drainage hole 97 to drain water in the storage space S1. Fig. 16 shows an example in which the drainage hole 97 is provided only in the leg shield 25. The drainage hole 97 may be provided in both of the leg shield 25 and the pocket cover 26 or may be provided only in the leg shield 25.

In the example of Fig. 16, the drainage hole 97 extends downward from the lower portion 48Lo of the inner circumferential surface 48 of the left concave portion 46. The drainage hole 97 penetrates upward and downward the leg shield 25. The drainage hole 97 is open in the inner circumferential surface 48 of the left concave portion 46. The drainage hole 97 is also open in the seating surface 75. The drainage hole 97 is disposed above a lower end of the groove outer side surface 73 of the fitting groove 72. The contacting end surface 57 of the pocket cover 26 is disposed behind the drainage hole 97 and overlapped with the drainage hole 97.

As shown in Fig. 11, the drainage hole 97 is disposed farther inward than the right projecting wall 85 and the left projecting wall 86 in the width direction of the pocket cover 26. That is, the drainage hole 97 is disposed closer to the center C1 of the pocket cover 26 in the vehicle width direction than the right projecting wall 85 and the left projecting wall 86. The drainage hole 97 is disposed below the lower end 85L of the right projecting wall 85 and the lower end 86L of the left projecting wall 86. water droplets that have entered the storage space S1 and/or water droplets generated in the storage space S1 flow downward toward the drainage hole 97 along the leg shield 25 or the pocket cover 26 and enter the drainage hole 97. Thus, water is removed from the storage space S1.

As described above, in the preferred embodiment, the leg shield 25 and the pocket cover 26 form the storage space S1. The pocket cover 26 overlaps the overlap portion 71 of the leg shield 25 in a rear view. The right projecting wall 85 and the left projecting wall 86 of the leg shield 25, which projects rearward from the overlap portion 71, forms a portion of the storage space S1. The right projecting wall 85 and the left projecting wall 86 are disposed on the right side and the left side of the storage space S1, respectively. Thus, the right projecting wall 85 and the left projecting wall 86 are disposed on the right side and the left side of an article in the storage space S1.

The pocket cover 26 is fixed to the leg shield 25 by the fixing bolt B1 inserted in the fastening boss 59 of the pocket cover 26 and the through hole 81 of the leg shield 25. The right projecting wall 85 and the left projecting wall 86 are disposed between the fastening boss 59 and the storage space S1 in the vehicle width direction. Thus, an article in the storage space S1 would come into contact with not the fastening boss 59 but the right projecting wall 85 or the left projecting wall 86. Accordingly, a load of an article in the storage space S1 is not transmitted directly to the fastening boss 59. Furthermore, the load of an article in the storage space S1 is distributed to the pocket cover 26 and the right projecting wall 85 and the left projecting wall 86, so that a load transmitted to the fastening boss 59 via the inner surface of the pocket cover 26 decreases.

In this way, since an article in the storage space S1 does not come into contact with the fastening boss 59, it is possible to downsize the fastening boss 59 or to decrease the number of the fastening bosses 59. Thus, it is possible to decrease a volume of a range which the fastening boss 59 occupies in a space between the leg shield 25 and the pocket cover 26. As a result, it is possible to prevent an article in the storage space S1 from coming into contact with the fastening boss 59 of the pocket cover 26 while reducing a decrease in the volume of the storage space S1. Furthermore, since an article in the storage space S1 does not come into contact with the fastening boss 59, it is possible to prevent the article from getting stuck with the fastening boss 59 and thus to improve user convenience.

Additionally, the pocket cover 26 is fixed to the leg shield 25 with the contacting end surface 57 of the pocket cover 26 being in contact with the leg shield 25. At least a portion of the right projecting wall 85 and the left projecting wall 86 are disposed farther to the rear than the contacting end surface 57 of the pocket cover 26. If water passes through a gap between the contacting end surface 57 of the pocket cover 26 and the leg shield 25, this water does not reach the storage space S1 unless it passes through a gap between the right projecting wall 85 or the left projecting wall 86 and the pocket cover 26 in the front-rear direction. Thus, water such as splashes of water generated while the straddled vehicle 1 is traveling or cleaning the straddled vehicle 1 is unlikely to enter the storage space S1. As a result, it is possible to reduce water to enter the storage space S1.

In the preferred embodiment, the upper end 85u of the right projecting wall 85 and the upper end 86u of the left projecting wall 86 are disposed above the through hole 81, and the lower end 85L of the right projecting wall 85 and the lower end 86L of the left projecting wall 86 are disposed below the through hole 81. Since the right projecting wall 85 and the left projecting wall 86 have such a length in the up-down direction, it is possible to protect the fastening boss 59 from an article in the storage space S1 within a wide range in the up-down direction. Furthermore, since the right projecting wall 85 and the left projecting wall 86 are long in the up-down direction, it is possible to block water within a wide range in the up-down direction and to further reduce water to enter the storage space S1.

In the preferred embodiment, the edge 56 of the pocket cover 26 including the contacting end surface 57 is fitted in the fitting groove 72 provided in the leg shield 25. The edge 56 of the pocket cover 26 and the fitting groove 72 of the leg shield 25 forms a labyrinth gap a direction of which changes 180 degree. Thus, water is unlikely to pass through a gap between the contacting end surface 57 of the pocket cover 26 and the leg shield 25. Furthermore, the right projecting wall 85 and the left projecting wall 86 of the leg shield 25 are disposed inward of the fitting groove 72 in the width direction of the pocket cover 26. If water passes through the labyrinth gap and enters the pocket cover 26, this water is prevented from entering the storage space S1 by the right projecting wall 85 and the left projecting wall 86. Thus, it is possible to further reduce water to enter the storage space S1.

In the preferred embodiment, at least a portion of the left concave portion 46 of the leg shield 25 is disposed in front of the pocket cover 26 and overlaps the pocket cover 26 in a rear view. The left concave portion 46 forms the storage space S1 together with the pocket cover 26. Thus, it is possible to increase the volume of the storage space S1. Furthermore, since the left concave portion 46 is greatly recessed forward, that is, the left concave portion 46 is recessed forward to a position farther to the front than the contacting end surface 57 of the pocket cover 26, it is possible to greatly increase the volume of the storage space S1.

In the preferred embodiment, the inner surface 85i of the right projecting wall 85, the inner surface 86i of the left projecting wall 86 and the inner surface 47 of the left concave portion 46 form the storage space S1. In a horizontal cross-section of the leg shield 25, at least a portion of the inner surface 85i of the right projecting wall 85 is disposed on a straight line L1 that is an extended line of the inner surface 47 of the left concave portion 46 and that extends rearward from the inner surface 47 of the left concave portion 46. In a horizontal cross-section of the leg shield 25, at least a portion of the inner surface 86i of the left projecting wall 86 is disposed on a straight line L1 that is an extended line of the inner surface 47 of the left concave portion 46 and that extends rearward from the inner surface 47 of the left concave portion 46. A connecting portion between the inner surface 85i of the right projecting wall 85 and the inner surface 47 of the left concave portion 46 is flat and does not form a step. A connecting portion between the inner surface 86i of the left projecting wall 86 and the inner surface 47 of the left concave portion 46 is flat and does not form a step. Thus, it is possible to lower stress generated in the connecting portion between the inner surface 85i of the right projecting wall 85 and the inner surface 47 of the left concave portion 46 and to lower stress generated in the connecting portion between the inner surface 86i of the left projecting wall 86 and the inner surface 47 of the left concave portion 46.

In the preferred embodiment, the drainage hole 97 to drain water in the storage space S1 is provided in at least one of the leg shield 25 and the pocket cover 26. The drainage hole 97 is disposed farther inward than the right projecting wall 85 and the left projecting wall 86 in the width direction of the pocket cover 26. Water, which has passed through a gap between the right projecting wall 85 or the left projecting wall 86 and the pocket cover 26 and entered the storage space S1, flows downward within the storage space S1 toward the drainage hole 97 and enters the drainage hole 97. Thus, it is possible to immediately discharge the water from the storage space S1 even if water has passed through a gap between the right projecting wall 85 or the left projecting wall 86 and the pocket cover 26.

In the preferred embodiment, the upper high portion 90, the lower high portion 94 and the low portion 93 are provided in the left projecting wall 86. The upper high portion 90, the lower high portion 94 and the low portion 93 are different from each other in a projecting amount in a rear direction from the overlap portion 71. The upper high portion 90 and the lower high portion 94, projecting amounts of which are greater than that of the low portion 93, are disposed between the fastening boss 59 and the storage space S1 in the vehicle width direction. Thus, it is possible to protect the fastening boss 59 from an article in the storage space S1.

In the preferred embodiment, the low portion 93 of the left projecting wall 86 is disposed farther outward than the upper high portion 90 and the lower high portion 94 of the left projecting wall 86 in the width direction of the pocket cover 26. In other words, since a projecting amount of the low portion 93 is smaller than projecting amounts of the upper high portion 90 and the lower high portion 94, it is possible to move the low portion 93 to a position farther outward than the upper high portion 90 and the lower high portion 94 in the width direction of the pocket cover 26. Thus, it is possible to increase the width of the storage space S1 and to further reduce a decrease in the volume of the storage space S1.

In the preferred embodiment, the right-upper inner portion 87, the right-lower inner portion 89 and the right-lower upper portion 88 are provided in the right projecting wall 85. The left-upper inner portion 91, the left-lower inner portion 96 and the left-lower upper portion 95 are provided in the left projecting wall 86. The right-lower upper portion 88 and the left-lower upper portion 95 are disposed over the fastening bosses 59 and overlap the fastening bosses 59 in a plan view. The right-upper inner portion 87, the right-lower inner portion 89, the left-upper inner portion 91 and the left-lower inner portion 96 are disposed between the fastening bosses 59 and the storage space S1 in the vehicle width direction. The right-lower upper portion 88, the left-lower upper portion 95, the right-upper inner portion 87, the right-lower inner portion 89, the left-upper inner portion 91 and the left-lower inner portion 96 form the storage space S1. Thus, it is possible to protect the fastening bosses 59 from an article in the storage space S1 not only at the inner side of the fastening boss 59, but also at the upper side of the fastening boss 59.

In the preferred embodiment, the left-upper rib 61u and the left-lower rib 61L, which project from the inner surface of the pocket cover 26, are disposed farther outward than the left projecting wall 86 of the leg shield 25 in the width direction of the pocket cover 26 and overlap the left projecting wall 86 of the leg shield 25 in a side view. In this way, since each of the left-upper rib 61u and the left-lower rib 61L and the left projecting wall 86 are disposed in the vehicle width direction and a gap between the left projecting wall 86 and the pocket cover 26 decreases, it is possible to further reduce water to enter the storage space S1.

In the preferred embodiment, the terminal insertion hole 45h of the electric power supply socket 45 is disposed in the storage space S1 formed between the leg shield 25 and the pocket cover 26. Electric power is supplied to an electric device E1 through a terminal T1 inserted in the terminal insertion hole 45h. As described above, water, which has passed through a gap between the contacting end surface 57 of the pocket cover 26 and the leg shield 25, is not able to enter the storage space S1 unless the water passes through a gap between the right projecting wall 85 or the left projecting wall 86 and the pocket cover 26 in the front-rear direction. Thus, it is possible to prevent or minimize the electric power supply socket 45 and an electric device E1 from getting wet.

In the preferred embodiment, not a wide pocket cover a width of which is equal or substantially equal to that of the leg shield 25, but a narrow pocket cover 26 a width of which is about half the width of the leg shield 25 is fixed to the leg shield 25. The pocket cover 26 is disposed only on left side of the vehicle center WO. Splashes of water generated while the straddled vehicle 1 is traveling or cleaning the straddled vehicle 1 are likely to enter the pocket cover 26 from an outer side of the pocket cover 26 in the vehicle width direction. Thus, it is possible to effectively reduce water to enter the storage space S1 by locating the right projecting wall 85 and the left projecting wall 86 at an outer side of the pocket cover 26 in the vehicle width direction.

In the preferred embodiment, it is possible to remove the fixing bolt B1, which is an example of a fastening member to fix the pocket cover 26 to the leg shield 25, from the leg shield 25 and the pocket cover 26 without breaking the fixing bolt B1. It is possible to remove the pocket cover 26 from the leg shield 25 by removing the fixing bolt B1. It is possible to fix the pocket cover 26 to the leg shield 25 by attaching the fixing bolt B1. Thus, it is possible to easily replace the existing pocket cover 26 with a new pocket cover 26. Furthermore, it is possible to select any one of a plurality of pocket cover 26s different in shape and to fix the selected pocket cover 26 to the leg shield 25.

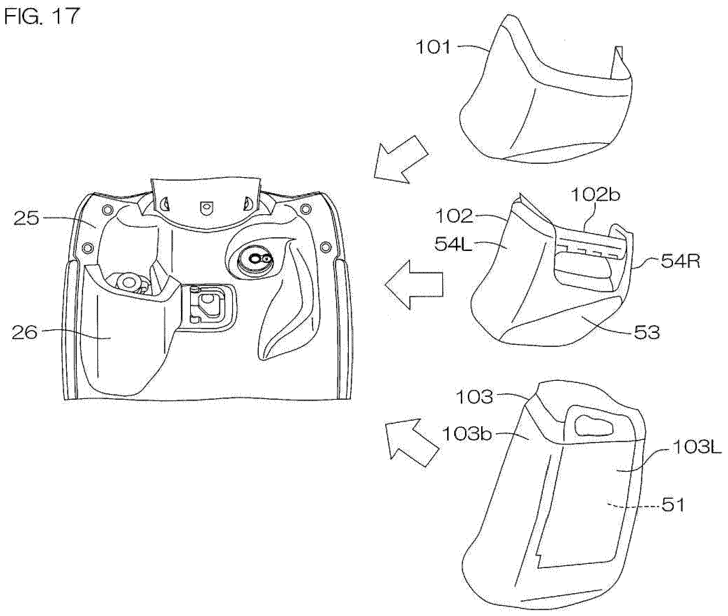

As long as a structure of a fixed portion (the fastening boss 59 etc.) fixed to the leg shield 25 is the same as that of the above-described pocket cover 26, a pocket cover having a shape different from the above-described pocket cover 26 may be fixed to the leg shield 25. For example, any of a big pocket 101, a holder pocket 102 and a box storage 103 shown in Fig. 17 may be fixed to the leg shield 25.

The big pocket 101 is a pocket cover having a shape similar to that of the above-described pocket cover 26, forming the storage space S1 larger than the storage space S1 of the above-described pocket cover 26, and not including a lid.

The holder pocket 102 is a pocket cover having a shape similar to that of the above-described pocket cover 26, including a holder bar 102b to restrict an article in the storage space S1 such as a cell phone from moving, and not including a lid. Fig. 17 shows an example in which the holder bar 102b is hung between a right side wall 54R and a left side wall 54L and is disposed above an upper end of a rear wall 53.

The box storage 103 is a closed pocket cover forming the storage space S1 and including a fixed box 103b that is to be fixed to the leg shield 25 and a lid 103L to open and close the take-in/take-out port 51 that is open in a rear surface of the fixed box 103b. The storage space S1 extends forward from the take-in/take-out port 51 of the fixed box 103b.

Each of the pocket covers shown in Fig. 17 (the big pocket 101, the holder pocket 102 and the box storage 103) includes a fixed portion (the fastening boss 59 etc.) that is similar to that of the above-described pocket cover 26.

### Other Preferred Embodiments

The above-described preferred embodiments may be modified as follows.

For example, the pocket cover 26 may be disposed not on the left side of the vehicle center WO, but only on the right side of the vehicle center WO or may be disposed on the right side and the left side of the vehicle center WO.

The fixing bolt B1 may be attached to the pocket cover 26 not from the front of the leg shield 25, but from the rear of the pocket cover 26. That is, the head portion of the fixing bolt B1 may be disposed behind the pocket cover 26 instead of in front of the leg shield 25.

The fastening member to fix the pocket cover 26 to the leg shield 25 is not limited to the fixing bolt B1 and may be a member other than the fixing bolt B1 such as a rivet or a clip. In this case, the fastening member may be detachable from the leg shield 25 and the pocket cover 26 without damaging the fastening member. The fastening member may be repeatedly attachable to the leg shield 25 and the pocket cover 26.

One of the right projecting wall 85 and the left projecting wall 86 of the leg shield 25 may be omitted. In this case, it is preferable to omit the right projecting wall 85. This is because splashes of water generated while the straddled vehicle 1 is traveling or cleaning the straddled vehicle 1 are likely to enter the pocket cover 26 from an outer side in the vehicle width direction.

The projecting wall of the leg shield 25 may further include a lower projecting wall disposed below at least one of the right projecting wall 85 and the left projecting wall 86. The lower projecting wall projects rearward from the overlap portion 71 of the leg shield 25 and is disposed in the pocket cover 26. The lower projecting wall may be connected to at least one of the right projecting wall 85 and the left projecting wall 86 or may be spaced apart from both of the right projecting wall 85 and the left projecting wall 86. In the former case, the lower projecting wall may extend from the lower end 85L of the right projecting wall 85 to the lower end 86L of the left projecting wall 86.

The upper end 85u of the right projecting wall 85 of the leg shield 25 may be disposed below at least one of the right-upper through hole 81a and the right-lower through hole 81b in a rear view. The lower end 85L of the right projecting wall 85 may be disposed above at least one of the right-upper through hole 81a and the right-lower through hole 81b in a rear view.

Similarly, the upper end 86u of the left projecting wall 86 of the leg shield 25 may be disposed below at least one of the right-upper through hole 81a and the right-lower through hole 81b in a rear view. The lower end 86L of the left projecting wall 86 may be disposed above at least one of the right-upper through hole 81a and the right-lower through hole 81b in a rear view.

The leg shield 25 may not form the fitting groove 72 in which the edge 56 of the pocket cover 26 fitted.

The leg shield 25 may not form the left concave portion 46 located in front of the pocket cover 26.

The drainage hole 97 to drain water from a space between the leg shield 25 and the pocket cover 26 may be disposed farther outward than at least one of the right projecting wall 85 and the left projecting wall 86 in the width direction of the pocket cover 26. The drainage hole 97 may be omitted from the leg shield 25.

The low portion 93 of the left projecting wall 86 may be disposed between the left-upper fastening boss 59c and the storage space S1 in the vehicle width direction instead of the upper high portion 90 of the left projecting wall 86. The low portion 93 of the left projecting wall 86 may be disposed between the left-lower fastening boss 59d and the storage space S1 in the vehicle width direction instead of the lower high portion 94 of the left projecting wall 86. The low portion 93 of the left projecting wall 86 may be disposed farther inward than at least one of the upper high portion 90 and the lower high portion 94 of the left projecting wall 86 in the width direction of the pocket cover 26.

A projecting amount of the low portion 93 from the overlap portion 71 may be equal to a projecting amount of the upper high portion 90 from the overlap portion 71. The projecting amount of the low portion 93 from the overlap portion 71 may be equal to a projecting amount of the lower high portion 94 from the overlap portion 71. That is, the low portion 93 may be omitted from the left projecting wall 86.

A projecting amount of the left projecting wall 86 from the overlap portion 71 may be constant from the upper end 86u of the left projecting wall 86 to the lower end 86L of the left projecting wall 86. A projecting amount of the right projecting wall 85 from the overlap portion 71 may be constant from the upper end 85u of the right projecting wall 85 to the lower end 85L of the right projecting wall 85.

The right-lower upper portion 88 disposed over the right-lower fastening boss 59b may be omitted from the right projecting wall 85. The left-lower upper portion 95 disposed over the left-lower fastening boss 59d may be omitted from the left projecting wall 86.

The inner rib 61 of the pocket cover 26 includes in addition to or instead of at least one of the left-upper rib 61u and the left-lower rib 61L, a right rib disposed farther outward than the right projecting wall 85 in the width direction of the pocket cover 26.

The reinforcing rib 60 to reinforce the fastening boss 59 may be omitted from the pocket cover 26.

The electric power supply socket 45 may be omitted from the straddled vehicle 1.

The straddled vehicle 1 may include, instead of the engine 11 which is an example of a power source, an electric motor which is another example of the power source or may include both of the engine 11 and the electric motor.

The straddled vehicle 1 is not limited to a scooter type motorcycle in which the engine 11 is swingable with respect to the frame 2, but may be an underbone type motorcycle in which the power source is fixed to the frame 2. The straddled vehicle 1 is not limited to a motorcycle, but may be a vehicle including not less than 3 wheels, an all-terrain vehicle, or a snowmobile. In a case in which the straddled vehicle 1 1 is a three-wheeled vehicle, two front wheels Fw may be provided or two rear wheels Rw may be provided.

Two or more arrangements among all the arrangements described above may be combined.

## Claims

1. A straddled vehicle (1) comprising:
a seat (6) configured for a driver to sit on;
a leg shield (25) that is disposed farther to a front of the straddled vehicle than a front end (6f) of the seat (6) and is configured to face legs of the driver sitting on the seat (6) in a vehicle front-rear direction;
a pocket cover (26, 101, 102, 103) that is disposed behind the leg shield (25) in the vehicle front-rear direction and forms together with the leg shield (25) a storage space (S1) configured for at least one article to put in; and
a fastening member (B1) that fixes the pocket cover (26, 101, 102, 103) to the leg shield (25),
wherein the pocket cover (26, 101, 102, 103) includes a contacting end surface (57) that is in contact with the leg shield (25), and a fastening boss (59, 59a, 59b, 59c, 59d) that is disposed farther inward than the contacting end surface (57) in a width direction of the pocket cover (26, 101, 102, 103) and in which the fastening member (B1) is inserted,
the leg shield (25) includes an overlap portion (71) that overlaps the pocket cover (26, 101, 102, 103) in a rear view of the vehicle, a projecting wall (85, 86) that projects rearward from the overlap portion (71) in the vehicle front-rear direction, and a through hole (81, 81a, 81b, 81c, 81d) that is disposed in front of the fastening boss (59, 59a, 59b, 59c, 59d) in the vehicle front-rear direction and in which the fastening member (B1) is inserted,
the projecting wall (85, 86) forms the storage space (S1) at a space inside the pocket cover (26, 101, 102, 103) together with the pocket cover (26, 101, 102, 103) and is disposed on at least one of a right side and a left side of the storage space (S1) with regard to a vehicle width direction,
the projecting wall (85, 86) is disposed between the fastening boss (59, 59a, 59b, 59c, 59d) and the storage space (S1) in the vehicle width direction, and
at least a portion of the projecting wall (85, 86) is disposed farther to the rear than the contacting end surface (57) of the pocket cover (26, 101, 102, 103) in the vehicle front-rear direction, wherein the pocket cover (26, 101, 102, 103) includes an inner rib (61, 61u, 61L) that projects forward from an inner surface of the pocket cover (26, 101, 102, 103) with regard to the vehicle front-rear direction, **characterized in that** the inner rib (61, 61u, 61L) is disposed farther outward than the projecting wall (85, 86) in the width direction of the pocket cover (26, 101, 102, 103) and overlaps the projecting wall (85, 86) in a side view of the vehicle.

2. A straddled vehicle (1) according to claim 1, **characterized in that** the projecting wall (85, 86) of the leg shield (25) includes an upper end (85u, 86u) disposed above the through hole (81, 81a, 81b, 81c, 81d) of the leg shield (25) with regard to a vehicle up-down direction, and a lower end (85L, 86L) disposed below the through hole (81, 81a, 81b, 81c, 81d) with regard to the vehicle up-down direction.

3. A straddled vehicle (1) according to claim 1 or 2, **characterized in that** the leg shield (25) further includes a fitting groove (72) in which an edge (56) of the pocket cover (26, 101, 102, 103) including the contacting end surface (57) is fitted, and
the projecting wall (85, 86) of the leg shield (25) is disposed inward of the fitting groove (72) in the width direction of the pocket cover (26, 101, 102, 103).

4. A straddled vehicle (1) according to any one of claims 1 to 3, **characterized in that** the leg shield (25) includes a concave portion (46) recessed forward to a position farther to the front than the contacting end surface (57) of the pocket cover (26, 101, 102, 103) with regard to the vehicle front-rear direction, and
at least a portion of the concave portion (46) is disposed in front of the pocket cover (26, 101, 102, 103) and forms the storage space (S1) together with the pocket cover (26, 101, 102, 103) with regard to the vehicle front-rear direction.

5. A straddled vehicle (1) according to claim 4, **characterized in that** a horizontal cross-section of the leg shield (25), at least a portion of an inner surface (85i, 86i) of the projecting wall (85, 86) forming the storage space (S1) is disposed on a straight line (L1) that is an extended line of an inner surface (47) of the concave portion (46) forming the storage space (S1) and that extends rearward from the inner surface (47) of the concave portion (46) with regard to the vehicle front-rear direction.

6. A straddled vehicle (1) according to any one of claims 1 to 5, **characterized in that** the projecting wall (85, 86) of the leg shield (25) includes a right projecting wall (85) and a left projecting wall (86) disposed on a right side and a left side of the storage space (S1), respectively,
one of the right projecting wall (85) and the left projecting wall (86) is disposed between the fastening boss (59, 59a, 59b, 59c, 59d) and the storage space (S1) in the vehicle width direction, and
at least a portion of the right projecting wall (85) and at least a portion of the left projecting wall (86) are disposed farther to the rear than the contacting end surface (57) of the pocket cover (26, 101, 102, 103) with regard to the vehicle front-rear direction.

7. A straddled vehicle (1) according to claim 6, **characterized in that** at least one of the leg shield (25) and the pocket cover (26, 101, 102, 103) includes a drainage hole (97) that is configured to drain water in the storage space (S1), and
the drainage hole (97) is disposed farther inward than the right projecting wall (85) and the left projecting wall (86) in the width direction of the pocket cover (26, 101, 102, 103).

8. A straddled vehicle (1) according to any one of claims 1 to 7, **characterized in that** the projecting wall (85, 86) of the leg shield (25) includes a high portion (90, 94) that projects rearward from the overlap portion (71) with regard to the vehicle front-rear direction, and a low portion (93) that projects rearward from the overlap portion (71) with regard to the vehicle front-rear direction and a projecting amount of which is smaller than that of the high portion (90, 94), and
the high portion (90, 94) is disposed between the fastening boss (59, 59a, 59b, 59c, 59d) and the storage space (S1) in the vehicle width direction.

9. A straddled vehicle (1) according to claim 8, **characterized in that** the low portion (93) of the projecting wall (85, 86) is disposed farther outward than the high portion (90, 94) of the projecting wall (85, 86) in the width direction of the pocket cover (26, 101, 102, 103).

10. A straddled vehicle (1) according to any one of claims 1 to 9, **characterized in that** the projecting wall (85, 86) of the leg shield (25) includes an upper portion (88, 95) that is disposed over the fastening boss (59, 59a, 59b, 59c, 59d) and overlaps the fastening boss (59, 59a, 59b, 59c, 59d) in a plan view of the vehicle and an inner portion (87, 89, 91, 96) disposed between the fastening boss (59, 59a, 59b, 59c, 59d) and the storage space (S1) in the vehicle width direction.

11. A straddled vehicle (1) according to any one of claims 1 to 10, **characterized by** an electric power supply socket (45) that includes a terminal insertion hole (45h) disposed in the storage space (S1) and is configured to supply electric power to an electric device (E1) through a terminal (T1) inserted in the terminal insertion hole (45h).

12. A straddled vehicle (1) according to any one of claims 1 to 11, **characterized in that** the pocket cover (26, 101, 102, 103) is disposed only on a right side or a left side of a center (WO) of the straddled vehicle (1) in the vehicle width direction, and
the projecting wall (85, 86) of the leg shield (25) is disposed at least outward of the storage space (S1) in the vehicle width direction.

13. A straddled vehicle (1) according to any one of claims 1 to 12, **characterized in that** the fastening member (B1) is attachable and detachable with respect to the leg shield (25) and the pocket cover (26, 101, 102, 103), and
the pocket cover (26, 101, 102, 103) is attachable and detachable with respect to the leg shield (25).

## Patentansprüche

1. Ein Spreiz-Sitz-Fahrzeug (1), das umfasst:
einen Sitz (6), konfiguriert für einen Fahrer, um darauf zu sitzen;
ein Beinschild (25), der weiter vorne an dem Spreiz-Sitz-Fahrzeug angeordnet ist als ein vorderes Ende (6f) des Sitzes (6) und konfiguriert ist, um den Beinen des Fahrers, der auf dem Sitz (6) sitzt, zugewandt zu sein, in einer Fahrzeug-Vorder-Rück-Richtung;
eine Taschenabdeckung (26, 101, 102, 103), die hinter dem Beinschild (25) in der Fahrzeug-Vorder-Rück-Richtung angeordnet ist, und zusammen mit dem Beinschild (25) einen Stauraum (S1) bildet, der zum Einlegen von zumindest einem Gegenstand ausgebildet ist; und
ein Befestigungselement (B1), mit dem die Taschenabdeckung (26, 101, 102, 103) am Beinschild (25) befestigt wird,
wobei die Taschenabdeckung (26, 101, 102, 103) eine berührende Endfläche (57), die in Kontakt mit dem Beinschild (25) ist, und einen Befestigungsvorsprung (59, 59a, 59b, 59c, 59d), der weiter innen als die berührende Endfläche (57) in einer Breitenrichtung der Taschenabdeckung (26, 101, 102, 103) angeordnet ist, und in den das Befestigungselement (B1) eingesetzt ist, enthält
der Beinschild (25) einen Überlappungsabschnitt (71), der die Taschenabdeckung (26, 101, 102, 103) in einer Rückansicht des Fahrzeugs überlappt, eine vorstehende Wand (85, 86), die von dem Überlappungsabschnitt (71) in der Fahrzeug-Vorder-Rück-Richtung nach hinten vorsteht, und ein Durchgangsloch (81, 81a, 81b, 81c, 81d), das vor dem Befestigungsvorsprung (59, 59a, 59b, 59c, 59d) in der Fahrzeug-Vorder-Rück-Richtung angeordnet ist und in welches das Befestigungselement (B1) eingesetzt ist, enthält
die vorstehende Wand (85, 86) den Stauraum (S1) an einem Raum innerhalb der Taschenabdeckung (26, 101, 102, 103) zusammen mit der Taschenabdeckung (26, 101, 102, 103) bildet und an zumindest einer von einer rechten Seite und einer linken Seite des Stauraums (S1) in Bezug auf eine Fahrzeug-Breiten-Richtung angeordnet ist,
die vorstehende Wand (85, 86) zwischen dem Befestigungsvorsprung (59, 59a, 59b, 59c, 59d) und dem Stauraum (S1) in Fahrzeug-Breiten-Richtung angeordnet ist, und zumindest ein Abschnitt der vorstehenden Wand (85, 86) weiter hinten angeordnet ist als die berührende Endfläche (57) der Taschenabdeckung (26, 101, 102, 103) in der Fahrzeug-Vorder-Rück-Richtung, wobei die Taschenabdeckung (26, 101, 102, 103) eine innere Rippe (61, 61u, 61L) enthält, die von einer inneren Oberfläche der Taschenabdeckung (26, 101, 102, 103) nach vorne in Bezug auf die Fahrzeug-Vorder-Rück-Richtung vorsteht, **dadurch gekennzeichnet, dass** die innere Rippe (61, 61u, 61L) in der Breitenrichtung der Taschenabdeckung (26, 101, 102, 103) weiter außen als die vorstehende Wand (85, 86) angeordnet ist und die vorstehende Wand (85, 86) in einer Seitenansicht des Fahrzeugs überlappt.

2. Ein Spreiz-Sitz-Fahrzeug (1) gemäß Anspruch 1, **dadurch gekennzeichnet, dass** die vorstehende Wand (85, 86) des Beinschildes (25) ein oberes Ende (85u, 86u), das oberhalb des Durchgangslochs (81, 81a, 81b, 81c, 81d) des Beinschildes (25) in Bezug auf eine Fahrzeug-Auf-Ab-Richtung angeordnet ist, und ein unteres Ende (85L, 86L), das unterhalb des Durchgangslochs (81, 81a, 81b, 81c, 81d) in Bezug auf die Fahrzeug-Auf-Ab-Richtung angeordnet ist, aufweist.

3. Ein Spreiz-Sitz-Fahrzeug (1) gemäß Anspruch 1 oder 2, **dadurch gekennzeichnet, dass** der Beinschild (25) weiterhin eine Passnut (72) enthält, in die eine Kante (56) der Taschenabdeckung (26, 101, 102, 103), welche die berührende Endfläche (57) enthält, eingepasst ist, und
die vorstehende Wand (85, 86) des Beinschildes (25) innerhalb der Passnut (72), in der Breitenrichtung der Taschenabdeckung (26, 101, 102, 103), angeordnet ist.

4. Ein Spreiz-Sitz-Fahrzeug (1) gemäß irgendeinem der Ansprüche 1 bis 3, **dadurch gekennzeichnet, dass** der Beinschild (25) einen konkaven Abschnitt (46) enthält, der nach vorne weiter als die berührende Endfläche (57) der Taschenabdeckung (26, 101, 102, 103) in Bezug auf die Fahrzeug-Vorder-Rück-Richtung ausgenommen ist, und
zumindest ein Abschnitt des konkaven Abschnitts (46) vor der Taschenabdeckung (26, 101, 102, 103) angeordnet ist und zusammen mit der Taschenabdeckung (26, 101, 102, 103) den Stauraum (S1) in Bezug auf die Fahrzeug-Vorder-Rück-Richtung bildet.

5. Ein Spreiz-Sitz-Fahrzeug (1) gemäß Anspruch 4, **dadurch gekennzeichnet, dass** ein horizontaler Querschnitt des Beinschilds (25), zumindest ein Abschnitt einer Innenfläche (85i, 86i) der vorstehenden Wand (85, 86), die den Stauraum (S1) bildet, auf einer geraden Linie (L1), die eine verlängerte Linie einer Innenfläche (47) des konkaven Abschnitts (46), der den Stauraum (S1) bildet, und die sich von der Innenfläche (47) des konkaven Abschnitts (46) in Bezug auf die Fahrzeug-Vorder-Rück-Richtung nach hinten erstreckt, angeordnet ist.

6. Ein Spreiz-Sitz-Fahrzeug (1) gemäß irgendeinem der Ansprüche 1 bis 5, **dadurch gekennzeichnet, dass** die vorstehende Wand (85, 86) des Beinschildes (25) eine rechte vorstehende Wand (85) und eine linke vorstehende Wand (86) enthält, die jeweils auf einer rechten und linken Seite des Stauraums (S1) angeordnet sind,
eine der rechten vorstehenden Wand (85) und der linken vorstehenden Wand (86) zwischen dem Befestigungsvorsprung (59, 59a, 59b, 59c, 59d) und dem Stauraum (S1) in Fahrzeug-Breiten-Richtung angeordnet ist, und
zumindest ein Abschnitt der rechten vorstehenden Wand (85) und zumindest ein Abschnitt der linken vorstehenden Wand (86) weiter hinten angeordnet sind als die berührende Endfläche (57) der Taschenabdeckung (26, 101, 102, 103) in Bezug auf die Fahrzeug-Vorder-Rück-Richtung.

7. Ein Spreiz-Sitz-Fahrzeug (1) gemäß Anspruch 6, **dadurch gekennzeichnet, dass** zumindest eines von Beinschild (25) und Taschenabdeckung (26, 101, 102, 103) ein Drainageloch (97) enthält, das zum Ableiten von Wasser im Stauraum (S1) konfiguriert ist, und
das Drainageloch (97) weiter innen angeordnet ist als die rechte vorstehende Wand (85) und die linke vorstehende Wand (86) in der Breitenrichtung der Taschenabdeckung (26, 101, 102, 103).

8. Ein Spreiz-Sitz-Fahrzeug (1) gemäß irgendeinem der Ansprüche 1 bis 7, **dadurch gekennzeichnet, dass** die vorstehende Wand (85, 86) des Beinschilds (25) einen hohen Abschnitt (90, 94), der von dem Überlappungsabschnitt (71) in Bezug auf die Fahrzeug-Vorder-Rück-Richtung nach hinten vorsteht, und einen niedrigen Abschnitt (93), der von dem Überlappungsabschnitt (71) in Bezug auf die Fahrzeug-Vorder-Rück-Richtung nach hinten vorsteht und dessen vorstehender Betrag kleiner ist als der des hohen Abschnitts (90, 94), enthält, und
der hohe Abschnitt (90, 94) zwischen dem Befestigungsvorsprung (59, 59a, 59b, 59c, 59d) und dem Stauraum (S1) in Fahrzeug-Breiten-Richtung angeordnet ist.

9. Ein Spreiz-Sitz-Fahrzeug (1) gemäß Anspruch 8, **dadurch gekennzeichnet, dass** der untere Abschnitt (93) der vorstehenden Wand (85, 86) weiter außen angeordnet ist als der obere Abschnitt (90, 94) der vorstehenden Wand (85, 86) in Breitenrichtung der Taschenabdeckung (26, 101, 102, 103).

10. Ein Spreiz-Sitz-Fahrzeug (1) gemäß irgendeinem der Ansprüche 1 bis 9, **dadurch gekennzeichnet, dass** die vorstehende Wand (85, 86) des Beinschildes (25) einen oberen Abschnitt (88, 95), der über dem Befestigungsvorsprung (59, 59a, 59b, 59c, 59a, 59b, 59c, 59d) angeordnet ist und den Befestigungsvorsprung (59, 59a, 59b, 59c, 59d) in einer Draufsicht auf das Fahrzeug überlappt, und einen inneren Abschnitt (87, 89, 91, 96), der zwischen dem Befestigungsvorsprung (59, 59a, 59b, 59c, 59d) und dem Stauraum (S1) in Fahrzeug-Breiten-Richtung angeordnet ist, enthält.

11. Ein Spreiz-Sitz-Fahrzeug (1) gemäß irgendeinem der Ansprüche 1 bis 10, **gekennzeichnet durch** eine elektrische Stromversorgungsbuchse (45), die ein Anschlusseinführungsloch (45h) enthält, das in dem Stauraum (S1) angeordnet ist, und die konfiguriert ist, um eine elektrische Vorrichtung (E1) über einen Anschluss (T1), der in das Anschlusseinführungsloch (45h) eingeführt ist, mit elektrischem Strom zu versorgen.

12. Ein Spreiz-Sitz-Fahrzeug (1) gemäß irgendeinem der Ansprüche 1 bis 11, **dadurch gekennzeichnet, dass** die Taschenabdeckung (26, 101, 102, 103) nur auf einer rechten oder einer linken Seite einer Mitte (WO) des Spreiz-Sitz-Fahrzeugs (1) in Fahrzeug-Breiten-Richtung angeordnet ist, und
die vorstehende Wand (85, 86) des Beinschildes (25) zumindest außerhalb des Stauraums (S1) in Fahrzeug-Breiten-Richtung angeordnet ist.

13. Ein Spreiz-Sitz-Fahrzeug (1) gemäß irgendeinem der Ansprüche 1 bis 12, **dadurch gekennzeichnet, dass** das Befestigungselement (B1) in Bezug auf den Beinschild (25) und die Taschenabdeckung (26, 101, 102, 103) anbringbar und abnehmbar ist, und
die Taschenabdeckung (26, 101, 102, 103) in Bezug auf den Beinschild (25) anbringbar und abnehmbar ist.

## Revendications

1. Véhicule à enfourcher (1), comprenant :
un siège (6) configuré pour qu'un conducteur puisse s'y asseoir ;
un protège-jambes (25) qui est disposé plus à l'avant du véhicule à enfourcher qu'une extrémité avant (6f) du siège (6) et est configuré pour faire face aux jambes du conducteur assis sur le siège (6) en direction avant-arrière du véhicule ;
un carénage de vide-poche (26, 101, 102, 103) qui est disposé derrière le protège-jambes (25) dans la direction avant-arrière du véhicule et forme conjointement au protège-jambes (25) un espace de rangement (S1) configuré pour y ranger au moins un article ; et
un élément de fixation (B1) qui fixe le carénage de vide-poche (26, 101, 102, 103) au protège-jambes (25),
dans lequel le carénage de vide-poche (26, 101, 102, 103) comprend une surface d'extrémité de contact (57) qui est en contact avec le protège-jambes (25), et un bossage de fixation (59, 59a, 59b, 59c, 59d) qui est disposé plus loin vers l'intérieur que la surface d'extrémité de contact (57) dans la direction de la largeur du carénage de vide-poche (26, 101, 102, 103) et dans lequel l'élément de fixation (B1) est inséré,
le protège-jambes (25) comprend une portion de chevauchement (71) qui chevauche le carénage de vide-poche (26, 101, 102, 103) dans une vue arrière du véhicule, une paroi en saillie (85, 86) qui fait saillie vers l'arrière à partir de la portion de chevauchement (71) dans la direction avant-arrière du véhicule, et un trou traversant (81, 81a, 81b, 81c, 81d) qui est disposé devant le bossage de fixation (59, 59a, 59b, 59c, 59d) dans la direction avant-arrière du véhicule et dans lequel l'élément de fixation (B1) est inséré,
la paroi en saillie (85, 86) forme l'espace de rangement (S1) dans un espace à l'intérieur du carénage de vide-poche (26, 101, 102, 103) conjointement au carénage de vide-poche (26, 101, 102, 103) et est disposée sur au moins un côté parmi un côté droit et un côté gauche de l'espace de rangement (S1) par rapport à la direction de la largeur du véhicule,
la paroi en saillie (85, 86) est disposée entre le bossage de fixation (59, 59a, 59b, 59c, 59d) et l'espace de rangement (S1) dans la direction de la largeur du véhicule, et
au moins une portion de la paroi en saillie (85, 86) est disposée plus à l'arrière que la surface d'extrémité de contact (57) du carénage de vide-poche (26, 101, 102, 103) dans la direction avant-arrière du véhicule, dans lequel le carénage de vide-poche (26, 101, 102, 103) comprend une nervure interne (61, 61u, 61L) qui fait saillie vers l'avant à partir d'une surface interne du carénage de vide-poche (26, 101, 102, 103) par rapport à la direction avant-arrière du véhicule,
**caractérisé en ce que** la nervure interne (61, 61u, 61L) est disposée plus à l'extérieur que la paroi en saillie (85, 86) dans la direction de la largeur du carénage de vide-poche (26, 101, 102, 103) et chevauche la paroi en saillie (85, 86) dans une vue latérale du véhicule.

2. Véhicule à enfourcher (1) selon la revendication 1, **caractérisé en ce que** la paroi en saillie (85, 86) du protège-jambes (25) comporte une extrémité supérieure (85u, 86u) disposée au-dessus du trou traversant (81, 81a, 81b, 81c, 81d) du protège-jambes (25) par rapport à une direction haut-bas du véhicule, et une extrémité inférieure (85L, 86L) disposée au-dessous du trou traversant (81, 81a, 81b, 81c, 81d) par rapport à la direction haut-bas du véhicule.

3. Véhicule à enfourcher (1) selon la revendication 1 ou 2, **caractérisé en ce que** le protège-jambes (25) comprend en outre une rainure de montage (72) dans laquelle un bord (56) du carénage de vide-poche (26, 101, 102, 103) comprenant la surface d'extrémité de contact (57) est monté, et
la paroi en saillie (85, 86) du protège-jambes (25) est disposée vers l'intérieur de la rainure de montage (72) dans la direction de la largeur du carénage de vide-poche (26, 101, 102, 103).

4. Véhicule à enfourcher (1) selon l'une quelconque des revendications 1 à 3, **caractérisé en ce que** le protège-jambes (25) comprend une portion concave (46) renfoncée vers l'avant jusqu'à une position plus à l'avant que la surface d'extrémité de contact (57) du carénage de vide-poche (26, 101, 102, 103) par rapport à la direction avant-arrière du véhicule, et
au moins une portion de la portion concave (46) est disposée à l'avant du carénage de vide-poche (26, 101, 102, 103) et forme l'espace de rangement (S1) conjointement au carénage de vide-poche (26, 101, 102, 103) par rapport à la direction avant-arrière du véhicule.

5. Véhicule à enfourcher (1) selon la revendication 4, **caractérisé en ce que**, dans une section transversale horizontale du protège-jambes (25), au moins une portion d'une surface interne (85i, 86i) de la paroi en saillie (85, 86) formant l'espace de rangement (S1) est disposée sur une ligne droite (L1) qui est une ligne prolongée depuis une surface interne (47) de la portion concave (46) formant l'espace de rangement (S1) et qui s'étend vers l'arrière depuis la surface interne (47) de la portion concave (46) par rapport à la direction avant-arrière du véhicule.

6. Véhicule à enfourcher (1) selon l'une quelconque des revendications 1 à 5, **caractérisé en ce que** la paroi en saillie (85, 86) du protège-jambes (25) comprend une paroi en saillie droite (85) et une paroi en saillie gauche (86) disposées respectivement sur un côté droit et sur un côté gauche de l'espace de rangement (S1),
une paroi parmi la paroi en saillie droite (85) et la paroi en saillie gauche (86) est disposée entre le bossage de fixation (59, 59a, 59b, 59c, 59d) et l'espace de rangement (S1) dans la direction de la largeur du véhicule, et
au moins une portion de la paroi en saillie droite (85) et au moins une portion de la paroi en saillie gauche (86) sont disposées plus à l'arrière que la surface d'extrémité de contact (57) du carénage de vide-poche (26, 101, 102, 103) par rapport à la direction avant-arrière du véhicule.

7. Véhicule à enfourcher (1) selon la revendication 6, **caractérisé en ce qu'**au moins un élément parmi le protège-jambes (25) et le carénage de vide-poche (26, 101, 102, 103) comprend un trou de drainage (97) qui est configuré pour drainer l'eau présente dans l'espace de rangement (S1), et
le trou de drainage (97) est disposé plus loin vers l'intérieur que la paroi saillante droite (85) et la paroi saillante gauche (86) dans la direction de la largeur du carénage de vide-poche (26, 101, 102, 103).

8. Véhicule à enfourcher (1) selon l'une quelconque des revendications 1 à 7, **caractérisé en ce que** la paroi en saillie (85, 86) du protège-jambes (25) comporte une portion haute (90, 94) qui fait saillie vers l'arrière à partir de la portion de chevauchement (71) par rapport à la direction avant-arrière du véhicule, et une portion basse (93) qui fait saillie vers l'arrière à partir de la portion de chevauchement (71) par rapport à la direction avant-arrière du véhicule et dont la dimension en saillie est inférieure à celle de la portion haute (90, 94), et
la portion haute (90, 94) est disposée entre le bossage de fixation (59, 59a, 59b, 59c, 59d) et l'espace de rangement (S1) dans la direction de la largeur du véhicule.

9. Véhicule à enfourcher (1) selon la revendication 8, **caractérisé en ce que** la portion basse (93) de la paroi en saillie (85, 86) est disposée plus à l'extérieur que la portion haute (90, 94) de la paroi en saillie (85, 86) dans la direction de la largeur du carénage de vide-poche (26, 101, 102, 103).

10. Véhicule à enfourcher (1) selon l'une quelconque des revendications 1 à 9, **caractérisé en ce que** la paroi en saillie (85, 86) du protège-jambes (25) comporte une portion supérieure (88, 95) disposée par-dessus le bossage de fixation. (59, 59a, 59b, 59c, 59d) et chevauche le bossage de fixation (59, 59a, 59b, 59c, 59d) dans une vue en plan du véhicule, et une portion interne (87, 89, 91, 96) disposée entre le bossage de fixation (59, 59a, 59b, 59c, 59d) et l'espace de rangement (S1) dans la direction de la largeur du véhicule.

11. Véhicule à enfourcher (1) selon l'une quelconque des revendications 1 à 10, **caractérisé par** une prise d'alimentation électrique (45) qui comprend un trou d'insertion de borne (45h) disposé dans l'espace de rangement (S1) et est configurée pour alimenter de l'énergie électrique à un dispositif électrique (E1) via une borne (T1) insérée dans le trou d'insertion de borne (45h).

12. Véhicule à enfourcher (1) selon l'une quelconque des revendications 1 à 11, **caractérisé en ce que** le carénage de vide-poche (26, 101, 102, 103) est disposé uniquement du côté droit ou du côté gauche d'un centre (WO) du véhicule à enfourcher (1) dans la direction de la largeur du véhicule, et
la paroi en saillie (85, 86) du protège-jambes (25) est disposée au moins vers l'extérieur de l'espace de rangement (S1) dans la direction de la largeur du véhicule.

13. Véhicule à enfourcher (1) selon l'une quelconque des revendications 1 à 12, **caractérisé en ce que** l'élément de fixation (B1) est attachable et détachable par rapport au protège-jambes (25) et au carénage de vide-poche (26, 101, 102, 103), et
le carénage de vide-poche (26, 101, 102, 103) est attachable et détachable par rapport au protège-jambes (25).
